# EUROPEAN PATENT APPLICATION

(11) **EP 4 664 591 A1**
(43) Date of publication of application: **17.12.2025**
(21) Application number: 23932475.9
(22) Date of filing: 13.04.2023
(51) Int. Cl.: H01M 10/0567, H01M 10/052, H01M 10/0568

(54) **ELECTROLYTE SOLUTION, BATTERY CELL, BATTERY, AND ELECTRIC DEVICE**

(71) Applicant: Contemporary Amperex Technology Co., Limited, Ningde, Fujian 352100 (CN)
(72) Inventor: WANG, Hansen, Ningde, Fujian 352100 (CN); WAN, Pan, Ningde, Fujian 352100 (CN); LIU, Chengyong, Ningde, Fujian 352100 (CN); HU, Bobing, Ningde, Fujian 352100 (CN); YI, Bo, Ningde, Fujian 352100 (CN); ZHAO, Yu, Ningde, Fujian 352100 (CN)
(74) Representative: Gong, Jinping
(86) International application number: PCT/CN2023/088173
(87) International publication number: WO 2024/212188

(57) **Abstract**

Provided in this application are an electrolyte solution, a battery cell, a battery, and a power consuming apparatus. The electrolyte solution includes a first anion represented by Formula (I), where X, a, b, R¹, and R² are respectively as defined herein.

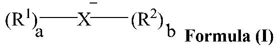

## Description

### TECHNICAL FIELD

This application relates to an electrolyte solution, a battery cell, a battery, and a power consuming apparatus.

### BACKGROUND

In recent years, batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace. With the application and proliferation of batteries, the energy density of conventional batteries with carbon-based negative electrodes has fallen short of the requirements, necessitating battery systems with higher energy density. Batteries employing lithium metal and similar materials as negative electrodes offer high energy density but suffer from shorter cycle life. The foregoing statement is merely intended to provide background information related to this application, and does not necessarily constitute the prior art.

### SUMMARY

This application provides an electrolyte solution, a battery cell, a battery, and a power consuming apparatus, which can improve the cycle performance of the battery.

A first aspect of this application provides an electrolyte solution, including a first anion represented by Formula (I),

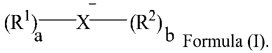

X is one or more elements selected from the group consisting of N, B, P, Al, Si, S, Cl, As, and Se. a represents an integer greater than or equal to 1. b represents an integer greater than or equal to 1. R¹ groups are each independently one or more selected from the group consisting of halogen atoms, halosulfonyl groups, haloalkylsulfonyl groups, and ester groups (-O-(C=O)-), and any two adjacent R¹ groups together with X optionally form a cyclic structure. R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure.

On the one hand, the first anion can form a high-quality SEI layer on an anode surface, thereby inducing dense metal deposition and enhancing the cycling stability of the battery, and on the other hand, can further reduce the decomposition-induced consumption of the first anion, thereby delaying the depletion of the electrolyte solution. In this way, the electrolyte solution provided in the embodiments of this application can have high reductive stability and a low consumption rate, thereby enhancing the cycle performance of the battery.

In any embodiment of this application, the R¹ groups are each independently one or more selected from the group consisting of fluorine atoms, fluorinesulfonyl groups, fluorinealkylsulfonyl groups, and ester groups (-O-(C=O)-), and any two adjacent R¹ groups together with X optionally form a cyclic structure.

In any embodiment of this application, the R¹ groups are one or more selected from the group consisting of fluorine atoms and the following groups:

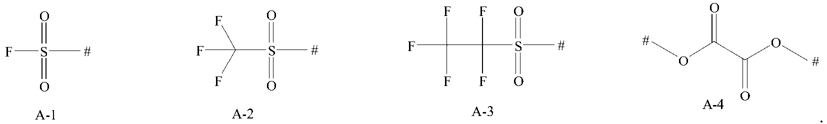

# represents an attachment point.

The R¹ groups, when selected from the foregoing groups, facilitate the formation of a higher-quality SEI layer on the anode surface, thereby inducing dense metal deposition and further extending the cycle life of the battery.

In any embodiment of this application, the R² groups are each independently one or more selected from the group consisting of C1-C10 oxaalkyl groups, C1-C10 oxacycloalkyl groups, C1-C10 halooxaalkyl groups, and C1-C10 halooxacycloalkyl groups, and any two adjacent R² groups together with X optionally form a cyclic structure. Oxygen atoms exhibit better binding interactions with metal ions. Therefore, when the R² groups contain an oxygen heteroatom, the R² groups can further provide a second reaction site capable of coordinating with metal ions, thereby increasing the reaction rate of metal ions, and in addition, can further enhance the overall stability and reductive stability of the first anion, thereby further reducing the decomposition-induced consumption of the first anion, and delay the depletion of the electrolyte solution, thereby further extending the cycle life of the battery.

In any embodiment of this application, the R² groups are each independently one or more selected from the group consisting of C1-C10 oxaalkyl groups and C1-C10 oxacycloalkyl groups, and any two adjacent R² groups together with X optionally form a cyclic structure. The halogen atoms reduce the reductive stability of the R² groups to some extent. Therefore, when containing no halogen atoms, the R² groups can further enhance the overall stability and reductive stability of the first anion, thereby further reducing the decomposition-induced consumption of the first anion, and delay the depletion of the electrolyte solution, thereby further extending the cycle life of the battery.

In any embodiment of this application, the R² groups are each independently one or more selected from the group consisting of the following groups:

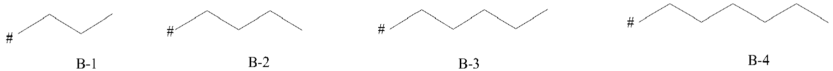

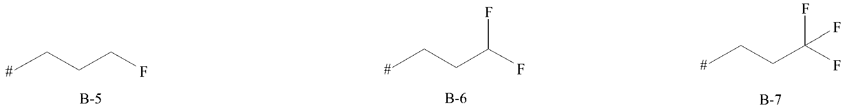

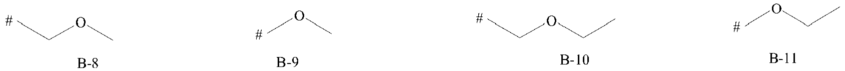

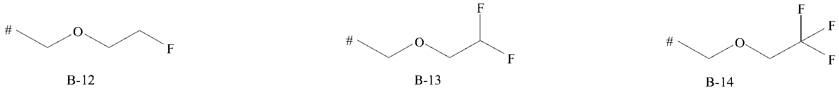

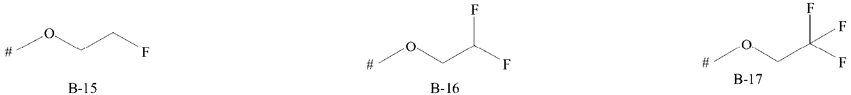

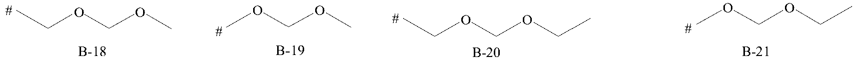

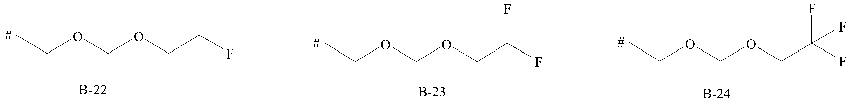

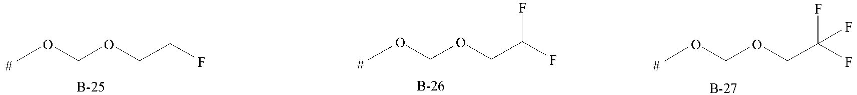

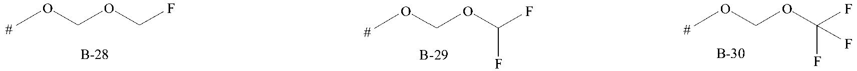

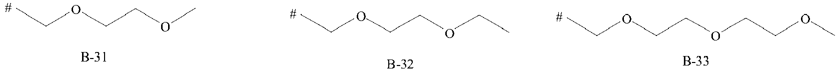

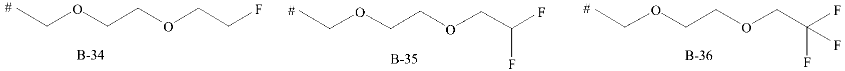

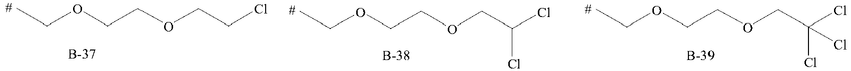

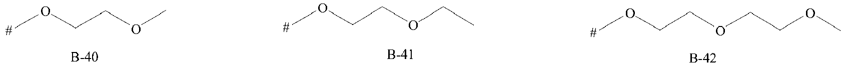

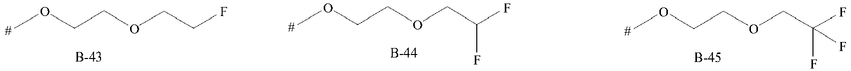

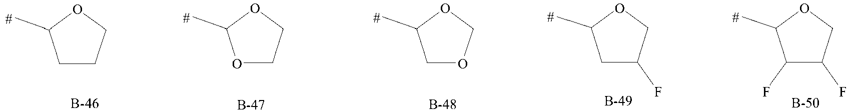

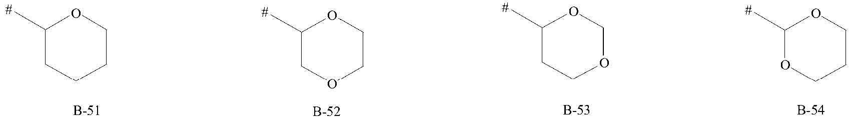

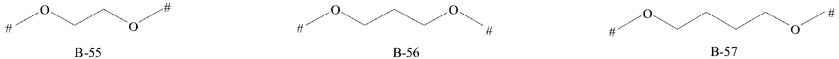

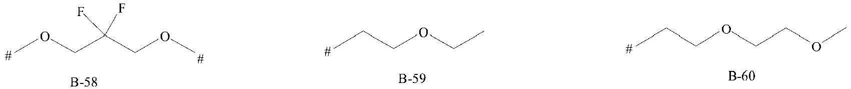

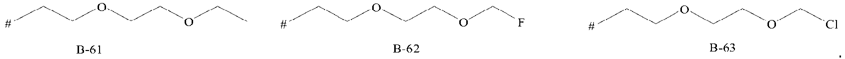

# represents an attachment point.

In any embodiment of this application, the R² groups are each independently one or more selected from the group consisting of B-31, B-32, B-40, B-41, B-60, and B-61. In this case, the R² groups contain two oxygen atoms and the two oxygen atoms are separated by a suitable distance, thereby facilitating better binding of lithium ions and further extending the cycle life of the battery.

In any embodiment of this application, X is one or more elements selected from the group consisting of N, B, and P, and optionally, is one or more elements selected from the group consisting of N and B.

In any embodiment of this application, X is N. a is 1, and b is 1. The R¹ groups are halosulfonyl groups or haloalkylsulfonyl groups, and optionally, are fluorinesulfonyl groups or fluorinealkylsulfonyl groups. The R² groups are one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, optionally, are one or more selected from the group consisting of C1-C10 oxaalkyl groups, C1-C10 oxacycloalkyl groups, C1-C10 halooxaalkyl groups, and C1-C10 halooxacycloalkyl groups, and further optionally, are one or more selected from the group consisting of C1-C10 oxaalkyl groups and C1-C10 oxacycloalkyl groups.

In any embodiment of this application, X is B. a represents an integer greater than or equal to 1, b represents an integer greater than or equal to 1, and a + b = 4, and optionally, a is 2, and b is 2. The R¹ groups are each independently one or more selected from the group consisting of halogen atoms and ester groups (-O-(C=O)-), and any two adjacent R¹ groups together with X optionally form a cyclic structure, and optionally, the R¹ groups are each independently one or more selected from the group consisting of fluorine atoms and ester groups, and any two adjacent R¹ groups together with X optionally form a cyclic structure. The R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure, optionally, the R² groups are each independently are one or more selected from the group consisting of C1-C10 oxaalkyl groups, C1-C10 oxacycloalkyl groups, C1-C10 halooxaalkyl groups, and C1-C10 halooxacycloalkyl groups, and an oxygen atom in the R² groups is directly bonded to X, and further optionally, the R² groups are each independently one or more selected from the group consisting of C1-C10 oxaalkyl groups and C1-C10 oxacycloalkyl groups, and an oxygen atom in the R² groups is directly bonded to X.

In any embodiment of this application, X is P. a represents an integer greater than or equal to 1, b represents an integer greater than or equal to 1, and a + b = 6, and optionally, a is 4 or 5, and b is 1 or 2. The R¹ groups are each independently one or more selected from the group consisting of halogen atoms and ester groups (-O-(C=O)-), and any two adjacent R¹ groups together with X optionally form a cyclic structure, and optionally, the R¹ groups are each independently one or more selected from the group consisting of fluorine atoms and ester groups (-O-(C=O)-), and any two adjacent R¹ groups together with X optionally form a cyclic structure. The R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure, optionally, the R² groups are each independently are one or more selected from the group consisting of C1-C10 oxaalkyl groups, C1-C10 oxacycloalkyl groups, C1-C10 halooxaalkyl groups, and C1-C10 halooxacycloalkyl groups, and an oxygen atom in the R² groups is directly bonded to X, and further optionally, the R² groups are each independently one or more selected from the group consisting of C1-C10 oxaalkyl groups and C1-C10 oxacycloalkyl groups, and an oxygen atom in the R² groups is directly bonded to X.

In any embodiment of this application, the first anion is one or more selected from the group consisting of the following:

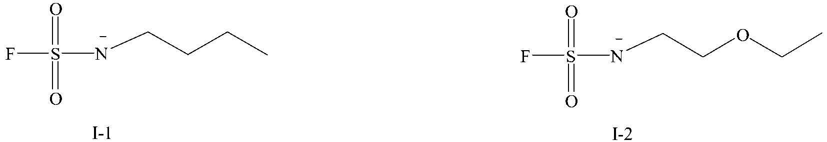

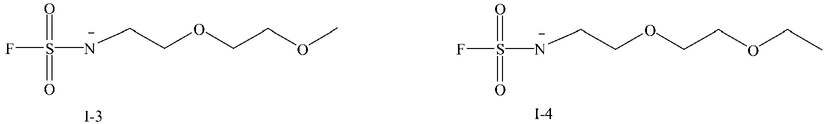

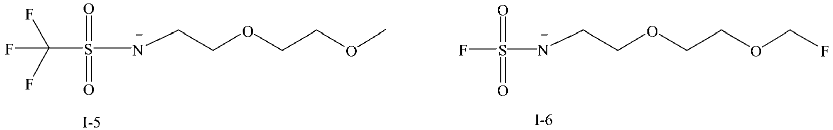

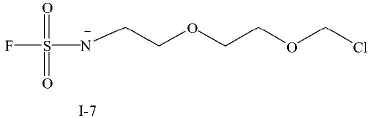

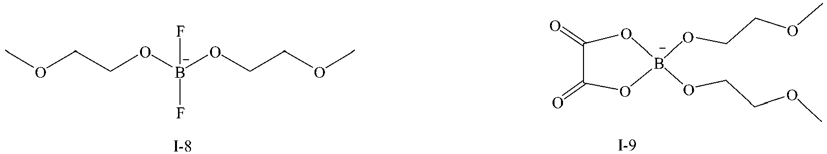

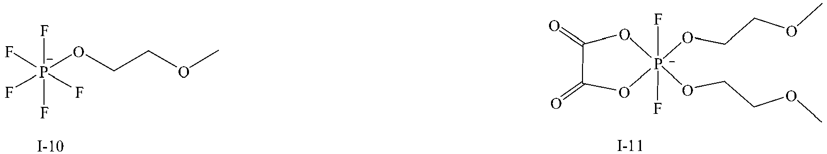

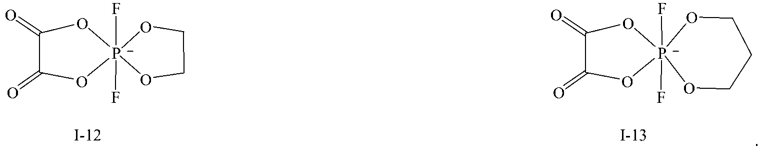

In any embodiment of this application, the first anion is one or more selected from the group consisting of I-3, I-4, I-8, and I-9. In this case, the R² groups in the first anion contain two oxygen atoms and the two oxygen atoms are separated by a suitable distance, thereby facilitating better binding with lithium ions, can further enhance the overall stability and reductive stability of the first anion, thereby further reducing the decomposition-induced consumption of the first anion, and delay the depletion of the electrolyte solution, thereby further extending the cycle life of the battery.

In any embodiment of this application, a molar concentration of the first anion in the electrolyte solution ranges from 0.5 mol/L to 4 mol/L, optionally, ranges from 1 mol/L to 3.5 mol/L, and further optionally, ranges from 1.5 mol/L to 3 mol/L. In this way, the reductive stability of the electrolyte solution can be enhanced, and the consumption rate of the electrolyte solution can be reduced, thereby further extending the cycle life of the battery.

In any embodiment of this application, the electrolyte solution further includes a second anion, and the second anion is one or more selected from the group consisting of bis(fluorosulfonyl)imide anions, bis(trifluoromethanesulfonyl)imide anions, bis(oxalato)borate anions, difluoro(oxalato)borate anions, difluorobis(oxalato)phosphate anions, tetrafluoro(oxalato)phosphate anions, difluorophosphate anions, hexafluorophosphate anions, tetrafluoroborate anions, hexafluoroarsenate anions, and trifluoromethanesulfonate anions. Optionally, the second anion is one or more selected from the group consisting of bis(fluorosulfonyl)imide anions, bis(trifluoromethanesulfonyl)imide anions, difluoro(oxalato)borate anions, and tetrafluoro(oxalato)phosphate anions. These second anions exhibit good compatibility with the first anion, and can facilitate the transport of metal ions, and further decompose on the anode surface to form an inorganic fluoride-rich SEI layer, thereby facilitating dense metal deposition and allowing the battery to have longer cycle life.

In any embodiment of this application, a molar concentration of the second anion in the electrolyte solution is less than or equal to 4 mol/L, optionally, is less than or equal to 2 mol/L, or further optionally, is less than or equal to 1 mol/L. The adjustment of the concentration of the second anion within the foregoing range neither affects the ion transport performance of the electrolyte solution nor compromises the stability of the electrolyte solution with the positive and negative electrodes, thereby allowing the battery to have longer cycle life.

In any embodiment of this application, the electrolyte solution is a first cation, and the first cation is one or more selected from the group consisting of alkali metal ions, alkaline earth metal ions, zinc ions, and aluminum ions, optionally, is one or more selected from the group consisting of lithium ions, sodium ions, potassium ions, and magnesium ions, and further optionally, is lithium ions.

In any embodiment of this application, the electrolyte solution includes a solvent, the solvent includes a first solvent, and the first solvent is one or more selected from the group consisting of ester and halogenated ester solvents, sulfone solvents, nitrile solvents, ether solvents, and ionic liquids. The first solvent can provide the electrolyte solution with high ionic conductivity and high reductive stability, and in addition exhibits good compatibility with the first anion.

In any embodiment of this application, the first solvent is one or more selected from the group consisting of dimethyl carbonate, diethyl carbonate, ethyl methyl carbonate, ethylene carbonate, propylene carbonate, fluoroethylene carbonate, difluoroethylene carbonate, methyl trifluoroethyl carbonate, ethyl trifluoroethyl carbonate, bis(2,2,2-trifluoroethyl) carbonate, methyl formate, ethyl formate, propyl formate, methyl acetate, ethyl acetate, propyl acetate, methyl propionate, ethyl propionate, propyl propionate, methyl 2,2,2-trifluoroacetate, ethyl 2,2,2-trifluoroacetate, dimethyl ether, diethyl ether, dipropyl ether, dibutyl ether, methyl ethyl ether, methyl propyl ether, methyl butyl ether, ethyl propyl ether, ethyl butyl ether, propyl butyl ether, dimethoxymethane, diethoxymethane, dipropoxymethane, 1,2-dimethoxyethane, dimethoxypropane, 1,2-diethoxyethane, ethylene glycol methyl ethyl ether, diethylene glycol dimethyl ether, triethylene glycol dimethyl ether, tetraethylene glycol dimethyl ether, tetrahydrofuran, 1,3-dioxolane, tetrahydropyran, 1,3-dioxane, 1,4-dioxane, dimethyl sulfone, dimethyl sulfoxide, sulfolane, ethyl methyl sulfone, tetramethylene sulfoxide, ethyl methyl sulfoxide, diethyl sulfone, diethyl sulfoxide, methyl phenyl sulfone, methyl phenyl sulfoxide, ethyl phenyl sulfone, ethyl phenyl sulfoxide, vinyl phenyl sulfone, vinyl phenyl sulfoxide, acetonitrile, propionitrile, butyronitrile, succinonitrile, and 2-butenenitrile.

In any embodiment of this application, the first solvent is one or more selected from the group consisting of dimethoxymethane, diethoxymethane, dipropoxymethane, 1,2-dimethoxyethane, dimethoxypropane, 1,2-diethoxyethane, ethylene glycol methyl ethyl ether, diethylene glycol dimethyl ether, triethylene glycol dimethyl ether, and tetraethylene glycol dimethyl ether.

In any embodiment of this application, the solvent further includes a second solvent, and the second solvent is one or more selected from the group consisting of hydrocarbon and halogenated hydrocarbon solvents and fluoroether solvents. The second solvent exhibits a wide electrochemical window and exhibits good compatibility with the first solvent, thereby further reducing the viscosity of the electrolyte solution and facilitating the transport of metal ions.

In any embodiment of this application, the second solvent is one or more selected from the group consisting of cyclohexane, benzene, toluene, p-xylene, m-xylene, o-xylene, fluorobenzene, 1,4-difluorobenzene, 1,3-difluorobenzene, 1,2-difluorobenzene, trifluoromethylbenzene, trifluoromethoxybenzene, decafluoropentane, perfluoropentanone, 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether.

In any embodiment of this application, the second solvent is one or more selected from the group consisting of trifluoromethoxybenzene, 1,1,2,2-tetrafluoroethyl-2,2,3,3-tetrafluoropropyl ether, and 1,2-bis(1,1,2,2-tetrafluoroethoxy)ethane.

In any embodiment of this application, a weight ratio of the first solvent to the second solvent ranges from (0.1 to 10):1, optionally, ranges from (0.3 to 3):1, and further optionally, ranges from (0.5 to 1.5):1. In this way, the electrolyte solution can exhibit high ionic conductivity and low viscosity, thereby increasing the coulombic efficiency and the cycle life of the battery.

In any embodiment of this application, the electrolyte solution further includes an additive, and the additive is one or more selected from the group consisting of propane sultone, ethylene sulfate, ethylene sulfite, tris(trimethylsilyl) phosphate, tris(trimethylsilyl) phosphite, tris(trifluoroethyl) phosphate, tris(trifluoroethyl) phosphite, tris(trimethylsilyl) borate, dimethyl maleic anhydride, and 1,4-butylene diisocyanate.

In any embodiment of this application, a weight proportion of the additive in the electrolyte solution is less than or equal to 5 wt%, optionally, is less than or equal to 3 wt%, or further optionally, is less than or equal to 1 wt%.

A second aspect of this application provides a battery cell, including the electrolyte solution in the first aspect of this application.

In any embodiment of this application, the battery cell includes metal battery cells, metal-air battery cells, metal-sulfur battery cells, and anode-free metal battery cells, and optionally, lithium metal battery cells, anode-free lithium metal battery cells, lithium-air battery cells, and lithium-sulfur battery cells.

A third aspect of this application provides a battery, including the battery cell in the second aspect of this application.

A fourth aspect of this application provides a power consuming apparatus, including the battery in the third aspect of this application.

The power consuming apparatus of this application includes the battery provided in this application, and therefore has at least the same advantages as the battery.

### BRIEF DESCRIPTION OF THE DRAWINGS

To describe the technical solutions of the embodiments of this application more clearly, the following briefly describes the accompanying drawings for describing the embodiments of this application. Evidently, the drawings outlined below are merely a part of embodiments of this application. A person of ordinary skill in the art may derive other drawings from such drawings without making any creative efforts.
FIG. 1 is a schematic diagram of an embodiment of a battery cell according to this application;
FIG. 2 is a schematic exploded view of an embodiment of a battery cell according to this application;
FIG. 3 is a schematic diagram of an embodiment of a battery module according to this application;
FIG. 4 is a schematic diagram of an embodiment of a battery pack according to this application;
FIG. 5 is a schematic exploded view of an embodiment of a battery pack shown in FIG. 4; and
FIG. 6 is a schematic diagram of an embodiment of a power consuming apparatus including a battery of this application as a power source.

In the drawings, the components are not drawn to actual scale. Description of reference numerals: 1. battery pack, 2. upper box body, 3. lower box body, 4. battery module, 5. secondary battery cell, 51. housing, 52. electrode assembly, and 53. cover plate.

### DETAILED DESCRIPTION

Hereinafter, embodiments of an electrolyte solution, a battery cell, a battery, and a power consuming apparatus of this application are specifically disclosed in the detailed description with appropriate reference to the accompanying drawings. However, there may be situations where unnecessary detailed explanations may be omitted. For example, there are situations where detailed explanations of well-known matters are omitted and repeated explanations of the same structure are actually provided. Thus, the following description does not become unnecessarily lengthy, which facilitates the easy comprehension of those skilled in the art. In addition, the accompanying drawings and the following explanations are provided for those skilled in the art to fully understand this application and are not intended to limit the subject matter recorded in the claims.

The "scope" disclosed in this application is limited in the form of a lower limit and an upper limit. The given scope is limited by selecting a lower limit and an upper limit, and the selected lower limit and upper limit limit the boundary of the special scope. The range limited in this way can include or exclude end values, and can be arbitrarily combined, that is, any lower limit can be combined with any upper limit to form a range. For example, if ranges of 60-120 and 80-110 are listed for a particular parameter, it is to be understood that ranges of 60-110 and 80-120 are also expected. In addition, if the minimum range values 1 and 2 are listed, and if the maximum range values 3, 4, and 5 are listed, the following ranges can all be expected: 1-3, 1-4, 1-5, 2-3, 2-4, and 2-5. In this application, unless otherwise specified, the numerical range "a to b" represents an abbreviated representation of any combination of real numbers between a and b, where a and b are both real numbers. For example, the numerical range "0-5" means that all real numbers between 0-5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in any order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

If there is no special explanation, the terms "including/comprising" mentioned in this application indicate open inclusion or closed inclusion. For example, "include" and "comprise" may mean that other components not listed may or may not further be included or comprised.

If not specifically stated, in this application, the term "or" is inclusive. For example, the phrase "A or B" means "A, B, or both A and B. More specifically, any one of the following conditions meets the condition "A or B": A is true (or present) and B is false (or not present); A is false (or not present) and B is true (or present); or both A and B are true (or present). In this disclosure, the phrases "at least one of A, B, and C" and "at least one of A, B, or C" both mean only A, only B, only C, or any combination of A, B, and C.

Unless otherwise specified, in this application, the terms "first", "second", and the like are used to distinguish different objects, rather than to describe a specific order or primary-secondary relationship.

Unless otherwise specified, the terms used in this application have well-known meanings as commonly understood by persons skilled in the art.

Unless otherwise stated, the values of the parameters mentioned in this application can be measured by various test methods commonly used in the art, for example, can be measured according to the test methods given in the embodiments of this application. Unless otherwise specified, the test temperature of the parameters is 25°C.

The term "alkyl group" encompasses linear and branched alkyl groups. Examples of the alkyl group include, but are not limited to, methyl, ethyl, propyl, isopropyl, butyl, isobutyl, tert-butyl, pentyl, and isopentyl groups. In various embodiments, the C1-C10 alkyl group refers to an alkyl group with 1 to 10 carbon atoms.

The term "oxaalkyl group" refers to an alkyl group with an oxygen atom in the backbone. The oxaalkyl group may contain one or more oxygen atoms. In various embodiments, the C1-C10 oxaalkyl group refers to an oxaalkyl group with 1 to 10 carbon atoms.

The term "cycloalkyl group" refers to a closed alicyclic system. Examples of the cycloalkyl group include, but are not limited to, a cyclopropyl group, a cyclobutyl group, a cyclopentyl group, and a cyclohexyl group. In various embodiments, the C3-C10 cycloalkyl group refers to an cycloalkyl group with 3 to 10 carbon atoms. The cycloalkyl group may bear or may not bear alkyl substituents on the ring.

The term "oxacycloalkyl group" refers to a cycloalkyl group with an oxygen atom. The oxacycloalkyl group may contain one or more oxygen atoms. Examples of the oxacycloalkyl group include, but are not limited to, a tetrahydrofuryl group, a tetrahydropyran group, a 1,3-dioxolanyl group, a 1,3-dioxanyl group, and a 1,4-dioxanyl group. In various embodiments, the C1-C10 oxacycloalkyl group refers to an oxacycloalkyl group with 1 to 10 carbon atoms. The oxacycloalkyl group may bear or may not bear alkyl substituents on the ring.

The term "haloalkyl group" refers to an alkyl group in which at least one hydrogen atom is substituted by a halogen atom. The haloalkyl group may contain one or more halogen atoms. When the haloalkyl group contains a plurality of halogen atoms, the plurality of halogen atoms may be the same or different.

The term "halooxaalkyl group" refers to an oxaalkyl group in which at least one hydrogen atom is substituted by a halogen atom. The halooxaalkyl group may contain one or more halogen atoms. When the halooxaalkyl group contains a plurality of halogen atoms, the plurality of halogen atoms may be the same or different.

The term "halocycloalkyl group" refers to a cycloalkyl group in which at least one hydrogen atom is substituted by a halogen atom. The halocycloalkyl group may contain one or more halogen atoms. When the halocycloalkyl group contains a plurality of halogen atoms, the plurality of halogen atoms may be the same or different.

The term "halooxacycloalkyl group" refers to an oxacycloalkyl group in which at least one hydrogen atom is substituted by a halogen atom. The halooxacycloalkyl group may contain one or more halogen atoms. When the halooxacycloalkyl group contains a plurality of halogen atoms, the plurality of halogen atoms may be the same or different.

The term "halogen atom" refers to a fluorine atom, a chlorine atom, a bromine atom, or the like.

Throughout this specification, "#" indicates an attachment point.

Throughout this specification, the substituents of the compounds are disclosed in groups or ranges. It is expressly contemplated that such description includes each and every individual subcombination of the members of these groups and ranges. For example, the term "C1-C6 alkyl group" is expressly intended to individually disclose C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, and C5-C6 alkyl groups. As another example, the integer range "3-10" is expressly intended to individually disclose 3, 4, 5, 6, 7, 8, 9, and 10. Accordingly, other groups or ranges are to be expressly contemplated.

A battery mentioned in embodiments of this application may be a single physical module including one or more battery cells to provide a higher voltage and a higher capacity. For example, the battery provided in this application may include a battery cell, a battery module, a battery pack, or the like.

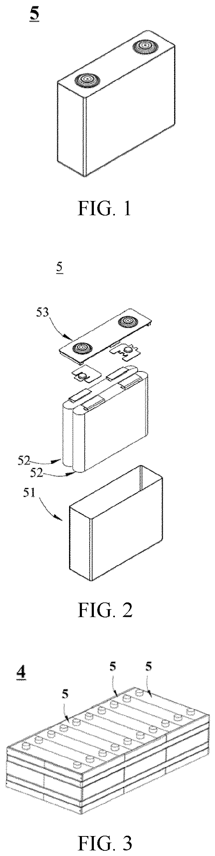

The battery cell is the smallest unit constituting the battery, and can achieve functions of charging and discharging independently. The battery cell may be cylindrical, flat-shaped, cuboid-shaped, or of another shape, which is also not limited in the embodiments of this application. FIG. 1 shows a battery cell 5 of a cuboidal structure as an example.

When a plurality of battery cells are provided, the plurality of battery cells are connected in series, in parallel, or in series-parallel through a bus component. In some embodiments, the battery may be a battery module. When a plurality of battery cells are provided, the plurality of battery cells are arranged and fastened to form one battery module. In some embodiments, the battery may be a battery pack. The battery pack includes a box body and battery cells. The battery cells or the battery module is accommodated in the box body. In some embodiments, the box body may be used as a part of the chassis structure of a vehicle. For example, a part of the box body may serve as at least a part of the underbody of a vehicle, or a part of the box body may serve as at least a part of the cross beam and longitudinal beam of a vehicle.

In some embodiments, the battery may be an energy storage apparatus. The energy storage apparatus includes an energy storage container, an energy storage cabinet, and the like.

The battery cell provided in the embodiments of this application includes battery cells using alkali metals, alkaline earth metals, zinc, aluminum, alloys thereof, or the like as negative electrode active materials. For example, the battery cell provided in the embodiments of this application includes metal battery cells, metal-air battery cells, metal-sulfur battery cells, anode-free metal battery cells, and the like. As an example, the battery cell may be a lithium metal battery cell, an anode-free lithium metal battery cell, a lithium-air battery cell, a lithium-sulfur battery cell, a sodium metal battery cell, an anode-free sodium metal battery cell, a sodium-air battery cell, a sodium-sulfur battery cell, a potassium metal battery cell, an anode-free potassium metal battery cell, a potassium-air battery cell, a potassium-sulfur battery cell, a magnesium metal battery cell, an anode-free magnesium metal battery cell, a magnesium-air battery cell, a magnesium-sulfur battery cell, or the like.

The battery cell generally includes an electrode assembly. The electrode assembly usually includes a positive electrode plate, a negative electrode plate, and a separator located between the positive electrode plate and the negative electrode plate. The electrode assembly may be either of a wound structure or a stacked structure, which is not limited in the embodiments of this application.

The battery cell may further include an outer packaging. The outer packaging can be used for packaging the electrode assembly and an electrolyte solution. The outer packaging may be a hard case, for example, a hard plastic case, an aluminum case, or a steel case. The outer packaging may alternatively be a soft pack, for example, a pouch type soft pack. The soft pack may be made from plastic, for example, one or more selected from the group consisting of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 is used for covering the opening to close the accommodating cavity. The electrode assembly 52 is packaged in the accommodating cavity. One or more electrode assemblies 52 may be included in the battery cell 5, which may be adjusted as required.

In some embodiments, the battery cell may be assembled into a battery module, the battery module may include a plurality of battery cells, and a specific quantity of battery cells may be adjusted according to the application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the plurality of battery cells 5 may be arranged in any other manner. Further, the plurality of battery cells 5 may be fixed by a fastener.

Optionally, the battery module 4 may further include a shell having an accommodating space. The plurality of battery cells 5 are accommodated in the accommodating space.

In some embodiments, the battery modules may further form a battery pack, and a quantity of battery modules included in the battery pack may be adjusted based on the application and capacity of the battery pack.

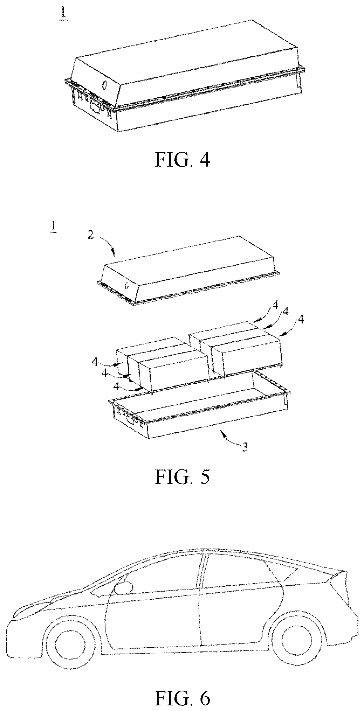

FIG. 4 and FIG. 5 are schematic diagrams of a battery pack 1 as an example. As shown in FIG. 4 and FIG. 5, the battery pack 1 may include a box body and a plurality of battery modules 4 arranged in the box body. The box body includes an upper box body 2 and a lower box body 3. The upper box body 2 is used for covering the lower box body 3 and form an enclosed space for accommodating the battery modules 4. The plurality of battery modules 4 may be arranged in the box body in any manner.

High energy density is an irreversible trend in the development of future batteries. Batteries using alkali metals, alkaline earth metals, zinc, aluminum, alloys thereof, or the like as negative electrode active materials have attracted widespread attention due to their high energy density. However, the large-scale application of the above batteries faces numerous challenges. For example, a solid electrolyte interphase (SEI) layer formed on an anode surface is usually not reusable. As a battery undergoes charge-discharge cycles, the thickness of the SEI layer accumulates, leading to continuous decomposition and consumption of an electrolyte solution, which in turn tends to cause the depletion of the electrolyte solution and compromise the cycle life of the battery.

In view of this, the inventors have made improvements to an electrolyte solution.

An embodiment of this application provides an electrolyte solution, including a first anion represented by Formula (I),

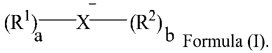

X is one or more elements selected from the group consisting of N, B, P, Al, Si, S, Cl, As, and Se; a represents an integer greater than or equal to 1; b represents an integer greater than or equal to 1; R¹ groups are each independently one or more selected from the group consisting of halogen atoms, halosulfonyl groups, haloalkylsulfonyl groups, and ester groups (-O-(C=O)-), and any two adjacent R¹ groups together with X optionally form a cyclic structure; and R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure.

A specific value of a+b is related to a specific type of the element X. For example, when X is A, a may be 1, and b may be 1. When X is B, a+b may be 4. When X is P, a+b may be 6.

The electrolyte solution provided in the embodiments of this application includes a first anion. The first anion has X as the central atom, and at least one R¹ group and at least one R² group are bonded to the central atom.

A plurality of R¹ groups are each independently one or more selected from the group consisting of halogen atoms, halosulfonyl groups, haloalkylsulfonyl groups, and ester groups (-O-(C=O)-), and any two adjacent R¹ groups together with X optionally form a cyclic structure. In this way, the R¹ groups facilitate the formation of a high-quality SEI layer on the anode surface, thereby inducing dense metal deposition and enhancing the cycling stability of the battery.

A plurality of R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure. Therefore, the R² groups can have reductive stability, thereby enhancing the overall stability and reductive stability of the first anion, so that the decomposition-induced consumption of the first anion can be reduced, and the depletion of the electrolyte solution can be delayed.

Therefore, on the one hand, the first anion can form a high-quality SEI layer on an anode surface, thereby inducing dense metal deposition and enhancing the cycling stability of the battery, and on the other hand, can further reduce the decomposition-induced consumption of the first anion, thereby delaying the depletion of the electrolyte solution. In this way, the electrolyte solution provided in the embodiments of this application can have high reductive stability and a low consumption rate, thereby enhancing the cycle performance of the battery.

In some embodiments, the R¹ groups may be each independently one or more selected from the group consisting of fluorine atoms, fluorinesulfonyl groups, fluorinealkylsulfonyl groups, and ester groups (-O-(C=O)-), and any two adjacent R¹ groups together with X optionally form a cyclic structure.

In some embodiments, the R¹ groups may be one or more selected from the group consisting of fluorine atoms and the following groups:

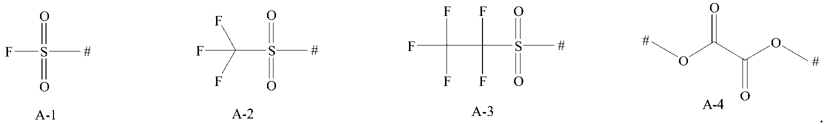

# represents an attachment point.

When an A-4 group appears, it indicates that at least two R¹ groups are bonded to the central atom X, and two adjacent R¹ groups together form the structure (i.e., an oxalate ester group) shown by the A-4 group, and the A-4 group further forms an annular structure with the central atom X.

The R¹ groups, when selected from the group consisting of fluorine atoms, fluorinesulfonyl groups, fluorinealkylsulfonyl groups, and oxalate ester groups, facilitate the formation of a higher-quality SEI layer on the anode surface, thereby inducing dense metal deposition and further extending the cycle life of the battery.

In some embodiments, the R² groups may be each independently one or more selected from the group consisting of C1-C10 oxaalkyl groups, C1-C10 oxacycloalkyl groups, C1-C10 halooxaalkyl groups, and C1-C10 halooxacycloalkyl groups, and any two adjacent R² groups together with X optionally form a cyclic structure.

Oxygen atoms exhibit better binding interactions with metal ions. Therefore, when the R² groups contain an oxygen heteroatom, the R² groups can further provide a second reaction site capable of coordinating with metal ions, thereby increasing the reaction rate of metal ions, and in addition, can further enhance the overall stability and reductive stability of the first anion, thereby further reducing the decomposition-induced consumption of the first anion, and delay the depletion of the electrolyte solution, thereby further extending the cycle life of the battery.

In some embodiments, a quantity of oxygen heteroatoms in the C1-C10 oxaalkyl groups may range from 1 to 4, optionally, is 2 or 3, and further optionally, is 2.

In some embodiments, a quantity of oxygen heteroatoms in the C1-C10 oxacycloalkyl groups may range from 1 to 4, optionally, is 2 or 3, and further optionally, is 2.

In some embodiments, a quantity of oxygen heteroatoms in the C1-C10 halooxaalkyl groups may range from 1 to 4, optionally, is 2 or 3, and further optionally, is 2.

In some embodiments, a quantity of oxygen heteroatoms in the C1-C10 halooxacycloalkyl groups may range from 1 to 4, optionally, is 2 or 3, and further optionally, is 2.

In some embodiments, the R² groups may be each independently one or more selected from the group consisting of C1-C10 oxaalkyl groups and C1-C10 oxacycloalkyl groups, and any two adjacent R² groups together with X optionally form a cyclic structure.

The halogen atoms reduce the reductive stability of the R² groups to some extent. Therefore, when containing no halogen atoms, the R² groups can further enhance the overall stability and reductive stability of the first anion, thereby further reducing the decomposition-induced consumption of the first anion, and delay the depletion of the electrolyte solution, thereby further extending the cycle life of the battery.

In some embodiments, the R² groups may be each independently one or more selected from the group consisting of the following groups:

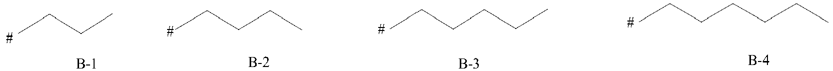

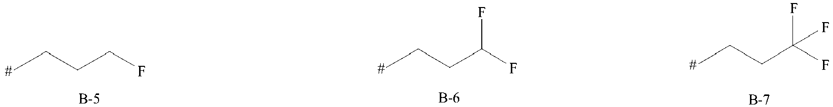

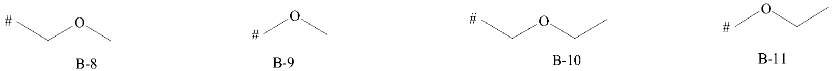

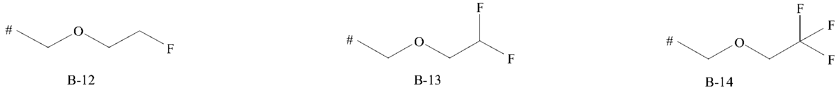

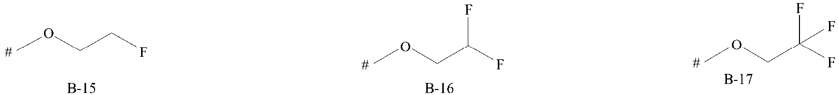

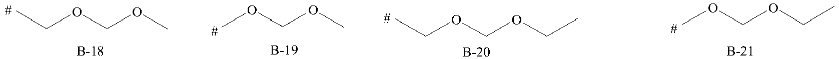

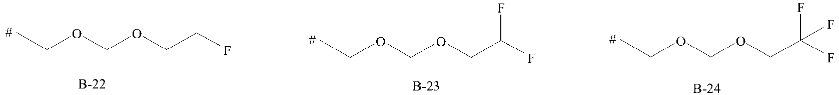

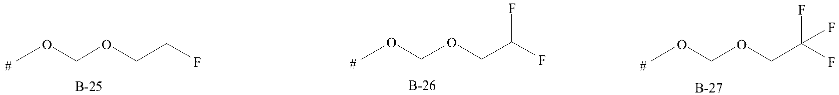

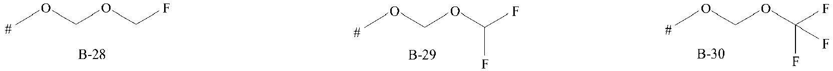

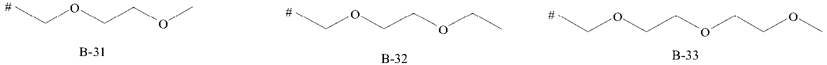

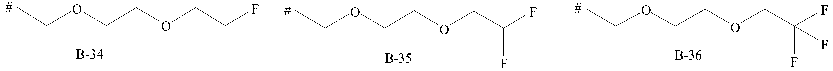

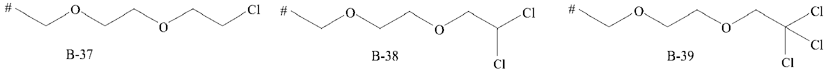

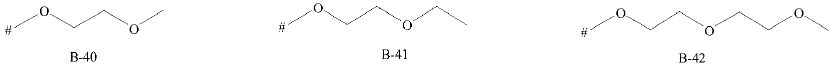

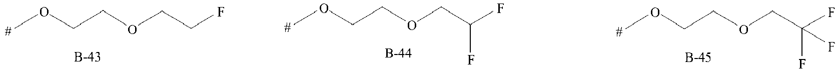

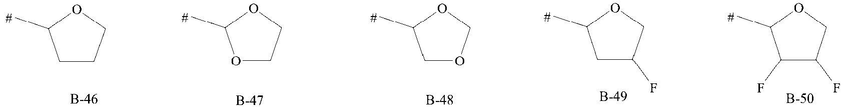

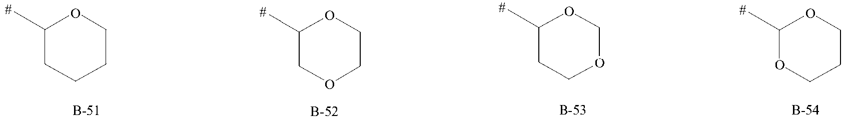

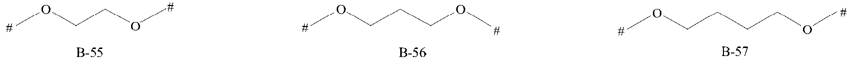

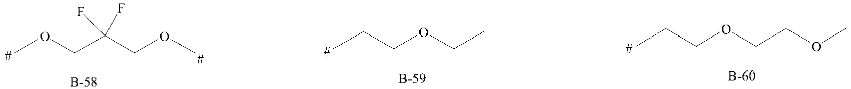

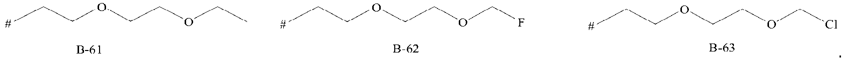

# represents an attachment point.

When B-55, B-56, B-57, and B-58 groups appear, it indicates that at least two R² groups are bonded to the central atom X, and two adjacent R² groups together form the structure shown by the B-55, B-56, B-57, and B-58 groups, and the B-55, B-56, B-57, and B-58 groups further form an annular structure with the central atom X.

In some embodiments, the R² groups may be each independently one or more selected from the group consisting of B-8 to B-63. When the R² groups contain an oxygen heteroatom, the R² groups may further provide a second reaction site capable of coordinating with metal ions, thereby increasing the reaction rate of metal ions.

In some embodiments, the R² groups are each independently one or more selected from the group consisting of B-8 to B-11, B-18 to B-21, B-31 to B-33, B-40 to B-42, B-46 to B-48, B-51 to B-57, and B-59 to B-61. When containing no halogen atoms, the R² groups can further enhance the overall stability and reductive stability of the first anion, thereby further reducing the decomposition-induced consumption of the first anion, and delay the depletion of the electrolyte solution, thereby further extending the cycle life of the battery.

In some embodiments, the R² groups may be each independently one or more selected from the group consisting of B-31, B-32, B-40, B-41, B-60, and B-61. In this case, the R² groups contain two oxygen atoms and the two oxygen atoms are separated by a suitable distance, thereby facilitating better binding of lithium ions and further extending the cycle life of the battery.

In some embodiments, X may be one or more elements selected from the group consisting of N, B, and P. Optionally, X is one or more elements selected from the group consisting of N and B.

In some embodiments, X is N; a is 1, and b is 1; the R¹ groups are halosulfonyl groups or haloalkylsulfonyl groups; and the R² groups are one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups.

In some embodiments, X is N, and the R¹ groups are fluorinesulfonyl groups or fluorinealkylsulfonyl groups.

In some embodiments, X is N, and the R¹ groups are A-1, A-2, or A-3. Optionally, the R¹ groups are A-1.

In some embodiments, X is N, and the R² groups are one or more selected from the group consisting of C1-C10 oxaalkyl groups, C1-C10 oxacycloalkyl groups, C1-C10 halooxaalkyl groups, and C1-C10 halooxacycloalkyl groups. Optionally, the R² groups are one or more selected from the group consisting of C1-C10 oxaalkyl groups and C1-C10 oxacycloalkyl groups.

In some embodiments, X is N, and the R² groups are one or more selected from the group consisting of B-8, B-10, B-12 to B-14, B-18, B-20, B-22 to B-24, B-31 to B-39, B-46 to B-54, and B-59 to B-63. Optionally, the R² groups are one or more selected from the group consisting of B-8, B-10, B-18, B-20, B-31 to B-33, B-46 to B-48, B-51 to B-54, and B-59 to B-61. Further optionally, the R² groups are one or more selected from the group consisting of B-31, B-32, B-60, and B-61. In this way, the overall stability and reductive stability of the first anion can be further enhanced, thereby further reducing the decomposition-induced consumption of the first anion, and the depletion of the electrolyte solution can be delayed, thereby further extending the cycle life of the battery.

In some embodiments, X is B; a represents an integer greater than or equal to 1, b represents an integer greater than or equal to 1, and a + b = 4; R¹ groups are each independently one or more selected from the group consisting of halogen atoms, and ester groups (-O-(C=O)-), and any two adjacent R¹ groups together with X optionally form a cyclic structure, for example, may form oxalate ester groups (A-4 groups); and R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure.

When X is B, a+b is 4. For example, in some embodiments, a is 1, and b is 3. In some embodiments, a is 2, and b is 2. In some embodiments, a is 3, and b is 1. Optionally, a is 2, and b is 2.

In some embodiments, X is B, and the R¹ groups are each independently one or more selected from the group consisting of fluorine atoms and ester groups (-O-(C=O)-), and any two adjacent R¹ groups together with X optionally form a cyclic structure, for example, may form oxalate ester groups.

In some embodiments, X is B, a is 1, and the R¹ groups are fluorine atoms.

In some embodiments, X is B, a is 2, and the R¹ groups are fluorine atoms or oxalate ester groups.

In some embodiments, X is B, a is 3, and the R¹ groups are fluorine atoms and/or oxalate ester groups.

In some embodiments, X is B, and the R² groups are each independently one or more selected from the group consisting of C1-C10 oxaalkyl groups, C1-C10 oxacycloalkyl groups, C1-C10 halooxaalkyl groups, and C1-C10 halooxacycloalkyl groups, and any two adjacent R² groups together with X optionally form a cyclic structure. optionally, the R² groups are each independently one or more selected from the group consisting of C1-C10 oxaalkyl groups and C1-C10 oxacycloalkyl groups, and any two adjacent R² groups together with X optionally form a cyclic structure.

In some embodiments, X is B, and the R² groups are each independently one or more selected from the group consisting of C1-C10 oxaalkyl groups, C1-C10 oxacycloalkyl groups, C1-C10 halooxaalkyl groups, and C1-C10 halooxacycloalkyl groups, and an oxygen atom in the R² groups is directly bonded to X. optionally, the R² groups are each independently one or more selected from the group consisting of C1-C10 oxaalkyl groups and C1-C10 oxacycloalkyl groups, and an oxygen atom in the R² groups is directly bonded to X. In this way, the overall stability and reductive stability of the first anion can be further enhanced, thereby further reducing the decomposition-induced consumption of the first anion, and the depletion of the electrolyte solution can be delayed, thereby further extending the cycle life of the battery.

In some embodiments, X is B, and the R² groups are one or more selected from the group consisting of B-9, B-11, B-15 to B-17, B-19, B-21, B-25 to B-30, B-40 to B-45, and B-55 to B-58. Optionally, the R² groups are each independently one or more selected from the group consisting of B-9, B-11, B-19, B-21, B-40, B-42, B-55, and B-57. Further optionally, the R² groups are each independently one or more selected from the group consisting of B-40 and B-41. In this way, the overall stability and reductive stability of the first anion can be further enhanced, thereby further reducing the decomposition-induced consumption of the first anion, and the depletion of the electrolyte solution can be delayed, thereby further extending the cycle life of the battery.

In some embodiments, X is P; a represents an integer greater than or equal to 1, b represents an integer greater than or equal to 1, and a + b = 6; R¹ groups are each independently one or more selected from the group consisting of halogen atoms, and ester groups (-O-(C=O)-), and any two adjacent R¹ groups together with X optionally form a cyclic structure, for example, may form oxalate ester groups (A-4 groups); and R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure.

When X is P, a+b is 6. For example, in some embodiments, a is 1, and b is 5. In some embodiments, a is 2, and b is 4. In some embodiments, a is 3, and b is 3. In some embodiments, a is 4, and b is 2. In some embodiments, a is 5, and b is 1. Optionally, a is 4 or 5, and b is 1 or 2.

In some embodiments, X is P, and the R¹ groups are each independently one or more selected from the group consisting of fluorine atoms and ester groups (-O-(C=O)-), and any two adjacent R¹ groups together with X optionally form a cyclic structure, for example, may form oxalate ester groups.

In some embodiments, X is P, a is 1, and the R¹ groups are fluorine atoms.

In some embodiments, X is P, a is 2, and the R¹ groups are fluorine atoms or oxalate ester groups.

In some embodiments, X is P, a is 3 or 4 or 5, and the R¹ groups are fluorine atoms and/or oxalate ester groups.

In some embodiments, X is P, and the R² groups are each independently one or more selected from the group consisting of C1-C10 oxaalkyl groups, C1-C10 oxacycloalkyl groups, C1-C10 halooxaalkyl groups, and C1-C10 halooxacycloalkyl groups, and any two adjacent R² groups together with X optionally form a cyclic structure. optionally, the R² groups are each independently one or more selected from the group consisting of C1-C10 oxaalkyl groups and C1-C10 oxacycloalkyl groups, and any two adjacent R² groups together with X optionally form a cyclic structure.

In some embodiments, X is P, and the R² groups are each independently one or more selected from the group consisting of C1-C10 oxaalkyl groups, C1-C10 oxacycloalkyl groups, C1-C10 halooxaalkyl groups, and C1-C10 halooxacycloalkyl groups, and an oxygen atom in the R² groups is directly bonded to X. optionally, the R² groups are each independently one or more selected from the group consisting of C1-C10 oxaalkyl groups and C1-C10 oxacycloalkyl groups, and an oxygen atom in the R² groups is directly bonded to X. In this way, the overall stability and reductive stability of the first anion can be further enhanced, thereby further reducing the decomposition-induced consumption of the first anion, and the depletion of the electrolyte solution can be delayed, thereby further extending the cycle life of the battery.

In some embodiments, X is P, and the R² groups are one or more selected from the group consisting of B-9, B-11, B-15 to B-17, B-19, B-21, B-25 to B-30, B-40 to B-45, and B-55 to B-58. Optionally, the R² groups are each independently one or more selected from the group consisting of B-9, B-11, B-19, B-21, B-40, B-42, B-55, and B-57. Further optionally, the R² groups are each independently one or more selected from the group consisting of B-40 and B-41. In this way, the overall stability and reductive stability of the first anion can be further enhanced, thereby further reducing the decomposition-induced consumption of the first anion, and the depletion of the electrolyte solution can be delayed, thereby further extending the cycle life of the battery.

In some embodiments, the first anion may be one or more selected from the group consisting of the following:

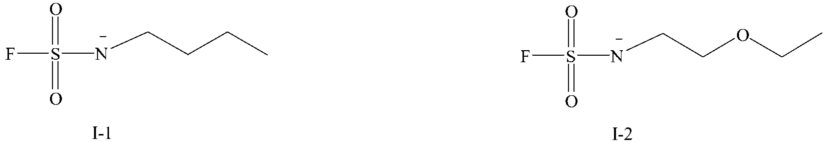

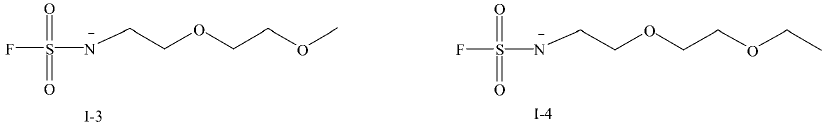

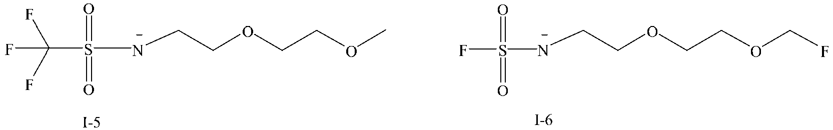

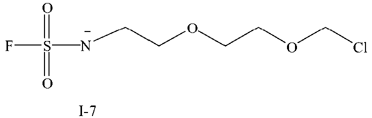

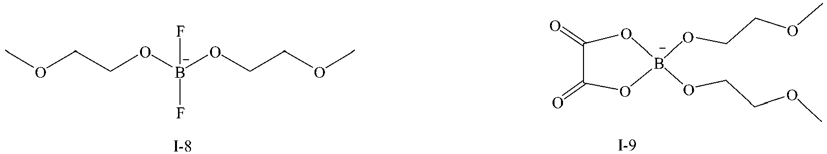

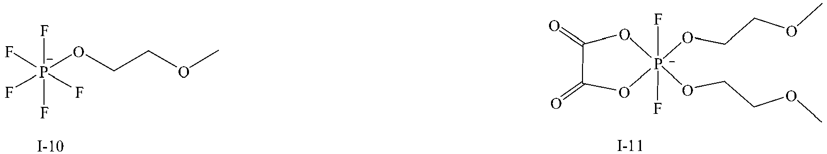

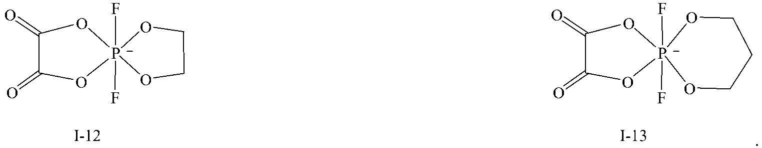

Optionally, the first anion is one or more selected from the group consisting of I-2, I-3, 1-4, I-5, I-8, I-9, I-10, and I-11.

Further optionally, the first anion is one or more selected from the group consisting of I-3, I-4, I-8, and I-9. In this case, the R² groups in the first anion contain two oxygen atoms and the two oxygen atoms are separated by a suitable distance, thereby facilitating better binding with lithium ions, can further enhance the overall stability and reductive stability of the first anion, thereby further reducing the decomposition-induced consumption of the first anion, and delay the depletion of the electrolyte solution, thereby further extending the cycle life of the battery.

In some embodiments, a molar concentration of the first anion in the electrolyte solution may range from 0.5 mol/L to 4 mol/L, optionally, range from 1 mol/L to 3.5 mol/L, and further optionally, range from 1.5 mol/L to 3 mol/L. In this way, the reductive stability of the electrolyte solution can be enhanced, and the consumption rate of the electrolyte solution can be reduced, thereby further extending the cycle life of the battery.

In some embodiments, the electrolyte solution may include a second anion, and the second anion may be one or more selected from the group consisting of bis(fluorosulfonyl)imide anions (FSI⁻), bis(trifluoromethanesulfonyl)imide anions (TFSI⁻), bis(oxalato)borate anions (BOB⁻), difluoro(oxalato)borate anions (DFOB⁻), difluorobis(oxalato)phosphate anions (DFOP⁻), tetrafluoro(oxalato)phosphate anions (TFOP⁻), difluorophosphate anions (PO₂F₂⁻), hexafluorophosphate anions (PF₆⁻), tetrafluoroborate anions (BF₄⁻), hexafluoroarsenate anions (AsF₆⁻), and trifluoromethanesulfonate anions (CF₃SO₃⁻).

In some embodiments, the second anion may be one or more selected from the group consisting of bis(fluorosulfonyl)imide anions (FSI⁻), bis(trifluoromethanesulfonyl)imide anions (TFSI⁻), difluoro(oxalato)borate anions (DFOB⁻), and tetrafluoro(oxalato)phosphate anions (TFOP⁻). These second anions exhibit good compatibility with the first anion, and can facilitate the transport of metal ions, and further decompose on the anode surface to form an inorganic fluoride-rich SEI layer, thereby facilitating dense metal deposition and allowing the battery to have longer cycle life.

In some embodiments, a molar concentration of the second anion in the electrolyte solution may be less than or equal to 4 mol/L, optionally, less than or equal to 2 mol/L, or further optionally, less than or equal to 1 mol/L. The adjustment of the concentration of the second anion within the foregoing range neither affects the ion transport performance of the electrolyte solution nor compromises the stability of the electrolyte solution with the positive and negative electrodes, thereby allowing the battery to have longer cycle life.

In some embodiments, the electrolyte solution is a first cation, and the first cation may be one or more selected from the group consisting of alkali metal ions, alkaline earth metal ions, zinc ions, and aluminum ions, optionally, is one or more selected from the group consisting of lithium ions, sodium ions, potassium ions, and magnesium ions, and further optionally, is lithium ions.

In some embodiments, the electrolyte solution includes a solvent, the solvent may include a first solvent, and the first solvent is one or more selected from the group consisting of ester and halogenated ester solvents, sulfone solvents, nitrile solvents, ether solvents, and ionic liquids. The first solvent can provide the electrolyte solution with high ionic conductivity and high reductive stability, and in addition exhibits good compatibility with the first anion.

In some embodiments, the first solvent may include ether solvents. The ether solvents have higher reductive stability, thereby allowing the battery to have longer cycle life.

In some embodiments, the first solvent may be one or more selected from the group consisting of dimethyl carbonate (DMC), diethyl carbonate (DEC), ethyl methyl carbonate (EMC), ethylene carbonate (EC), propylene carbonate (PC), fluoroethylene carbonate (FEC), difluoroethylene carbonate, methyl trifluoroethyl carbonate, ethyl trifluoroethyl carbonate, bis(2,2,2-trifluoroethyl) carbonate, methyl formate, ethyl formate, propyl formate, methyl acetate, ethyl acetate, propyl acetate, methyl propionate, ethyl propionate, propyl propionate, methyl 2,2,2-trifluoroacetate, ethyl 2,2,2-trifluoroacetate, dimethyl ether, diethyl ether, dipropyl ether, dibutyl ether, methyl ethyl ether, methyl propyl ether, methyl butyl ether, ethyl propyl ether, ethyl butyl ether, propyl butyl ether, dimethoxymethane, diethoxymethane, dipropoxymethane, 1,2-dimethoxyethane, dimethoxypropane, 1,2-diethoxyethane, ethylene glycol methyl ethyl ether, diethylene glycol dimethyl ether, triethylene glycol dimethyl ether, tetraethylene glycol dimethyl ether, tetrahydrofuran, 1,3-dioxolane, tetrahydropyran, 1,3-dioxane, 1,4-dioxane, dimethyl sulfone, dimethyl sulfoxide, sulfolane, ethyl methyl sulfone, tetramethylene sulfoxide, ethyl methyl sulfoxide, diethyl sulfone, diethyl sulfoxide, methyl phenyl sulfone, methyl phenyl sulfoxide, ethyl phenyl sulfone, ethyl phenyl sulfoxide, vinyl phenyl sulfone, vinyl phenyl sulfoxide, acetonitrile, propionitrile, butyronitrile, succinonitrile, and 2-butenenitrile.

In some embodiments, the first solvent may be one or more selected from the group consisting of dimethoxymethane, diethoxymethane, dipropoxymethane, 1,2-dimethoxyethane, dimethoxypropane, 1,2-diethoxyethane, ethylene glycol methyl ethyl ether, diethylene glycol dimethyl ether, triethylene glycol dimethyl ether, and tetraethylene glycol dimethyl ether.

In some embodiments, the first solvent may be one or more selected from the group consisting of 1,2-dimethoxyethane (DME) and 1,2-diethoxyethane (DEE).

In some embodiments, weight percentage content of the first solvent is denoted as W₁, and based on the total weight of the solvent, 70 wt% ≤ W₁ ≤ 100 wt%, and optionally, 75 wt% ≤ W₁ ≤ 100 wt%, 80 wt% ≤ W₁ ≤ 100 wt%, 85 wt% ≤ W₁ ≤ 100 wt%, and 90 wt% ≤ W₁ ≤ 100 wt%. The content of the first solvent is within the foregoing range, so that the electrolyte solution can exhibit high ionic conductivity and high reductive stability, and in addition exhibit better compatibility with the first anion, thereby facilitating dense metal deposition and allowing the battery to have longer cycle life.

In some embodiments, W₁ may be 100 wt%.

In some embodiments, the solvent may further include a second solvent, and the second solvent may be one or more selected from the group consisting of hydrocarbon and halogenated hydrocarbon solvents and fluoroether solvents. The second solvent exhibits a wide electrochemical window and exhibits good compatibility with the first solvent, thereby further reducing the viscosity of the electrolyte solution and facilitating the transport of metal ions.

In some embodiments, the second solvent may be one or more selected from the group consisting of cyclohexane, benzene, toluene, p-xylene, m-xylene, o-xylene, fluorobenzene, 1,4-difluorobenzene, 1,3-difluorobenzene, 1,2-difluorobenzene, trifluoromethylbenzene, trifluoromethoxybenzene, decafluoropentane, perfluoropentanone, 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether.

In some embodiments, the second solvent may be one or more selected from the group consisting of trifluoromethoxybenzene, 1,1,2,2-tetrafluoroethyl-2,2,3,3-tetrafluoropropyl ether, and 1,2-bis(1,1,2,2-tetrafluoroethoxy)ethane. Therefore, the second solvent may exhibit a wide electrochemical window and exhibit good compatibility with the first solvent, and can further facilitate the formation of an inorganic fluoride-rich SEI layer on the anode surface, thereby facilitating dense metal deposition and allowing the battery to have longer cycle life.

In some embodiments, weight percentage content of the second solvent is denoted as W₂, and based on the total weight of the solvent, 0 < W₂ ≤ 30 wt%, and optionally, 0 < W₂ ≤ 25 wt%, 0 < W₂ ≤ 20 wt%, 0 < W₂ ≤ 15 wt%, and 0 < W₂ ≤ 10 wt%.

In some embodiments, a weight ratio of the first solvent to the second solvent may range from (0.1 to 10):1, optionally, range from (0.3 to 3):1, and further optionally, range from (0.5 to 1.5):1. In this way, the electrolyte solution can exhibit high ionic conductivity and low viscosity, thereby increasing the coulombic efficiency and the cycle life of the battery.

In some embodiments, the electrolyte solution may further include an additive. A type of the additive is not particularly limited in this application, provided that the essence of this application is not impaired. As an example, the additive may be one or more selected from the group consisting of propane sultone (PS), ethylene sulfate (DTD), ethylene sulfite (ES), tris(trimethylsilyl) phosphate (TMSP), tris(trimethylsilyl) phosphite, tris(trifluoroethyl) phosphate, tris(trifluoroethyl) phosphite, tris(trimethylsilyl) borate, dimethyl maleic anhydride, and 1,4-butylene diisocyanate.

In some embodiments, a weight proportion of the additive in the electrolyte solution may be less than or equal to 5 wt%, optionally, may be less than or equal to 3 wt%, or further optionally, may be less than or equal to 1 wt%.

### [Preparation method]

The preparation method of the electrolyte solution is well-known. For example, a first electrolyte salt (composed of a first anion and a first cation), an optional second electrolyte salt (composed of a second anion and a first cation), a solvent, and an optional additive may be uniformly mixed to obtain the electrolyte solution. During a preparation process, the order of adding the materials is not particularly limited. The materials may be added simultaneously or in batches.

The components in the electrolyte solution and respective contents thereof may be determined using conventional methods in the art. For example, detection may be performed using methods such as gas chromatography-mass spectrometry (GC-MS), ion chromatography (IC), liquid chromatography (LC), and inductively coupled plasma optical emission spectrometry (ICP-OES).

A battery cell includes a positive electrode plate and a negative electrode plate.

The structure and/or composition of each of the positive electrode plate and the negative electrode plate may be selected based on a type of the battery cell. This is not limited in the embodiments of this application. The battery cell in the embodiments of this application may include metal battery cells, metal-air battery cells, metal-sulfur battery cells, anode-free metal battery cells, and the like. As an example, the battery cell may include a lithium metal battery cell, an anode-free lithium metal battery cell, a lithium-air battery cell, a lithium-sulfur battery cell, a sodium metal battery cell, an anode-free sodium metal battery cell, a sodium-air battery cell, a sodium-sulfur battery cell, a potassium metal battery cell, an anode-free potassium metal battery cell, a potassium-air battery cell, a potassium-sulfur battery cell, a magnesium metal battery cell, an anode-free magnesium metal battery cell, a magnesium-air battery cell, a magnesium-sulfur battery cell, or the like. In some embodiments, the battery cell may include lithium metal battery cells, anode-free lithium metal battery cells, lithium-air battery cells, and lithium-sulfur battery cells.

### [Positive electrode plate]

In some embodiments, the positive electrode plate includes a positive electrode current collector and a positive electrode film layer arranged on at least one surface of the positive electrode current collector, and the positive electrode film layer includes a positive electrode active material. For example, the positive electrode current collector has two opposite surfaces in a thickness direction of the positive electrode current collector, and the positive electrode film layer is arranged on either or both of the two opposite surfaces of the positive electrode current collector.

The type of the positive electrode active material may be selected based on a type of the battery cell. This is not limited in the embodiments of this application.

For example, when the battery cell is a lithium metal battery cell or an anode-free lithium metal battery cell, the positive electrode active material may be, but is not limited to, one or more selected from the group consisting of lithium transition metal oxide, lithium-containing phosphate, and respective modified compounds thereof. Examples of lithium transition metal oxide may be, but are not limited to, one or more selected from the group consisting of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphate may be, but are not limited to, one or more selected from the group consisting of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof. In some embodiments, to further improve the energy density of a battery, the positive electrode active material may be one or more selected from the group consisting of lithium transition metal oxide represented by a general formula LiₐNi_{b}Co_{c}M_{d}O_{c}Ar and modified compounds thereof. 0.8 ≤ a ≤ 1. 2, 0.5 ≤ B < 1, 0 < c < 1, 0 < d < 1, 1 ≤ e ≤ 2, 0 ≤ f ≤ 1, M is one or more selected from the group consisting of Mn, Al, Zr, Zn, Cu, Cr, Mg, Fe, V, Ti, and B, and A is one or more selected from the group consisting of N, F, S and Cl.

For example, the positive electrode active material may be one or more selected from the group consisting of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.5}Co_{0.25}Mn_{0.25}O₂ (NCM211), LiNi_{0.6}Co_{0.2}Mn_{0.2}O₂ (NCM622), LiNi_{0.8}Co_{0.1}Mn_{0.1}O₂ (NCM811), LiNi_{0.96}Co_{0.02}Mn_{0.02}O₂ (Ni96), LiNi_{0.85}Co_{0.15}Al_{0.05}O₂, LiFePO₄, and LiMnPO₄.

When the battery cell is a sodium metal battery cell or an anode-free sodium metal battery cell, the positive electrode active material may be, but is not limited to, one or more selected from the group consisting of sodium transition metal oxide, a polyanionic material (for example, phosphate, fluorophosphate, pyrophosphate, or sulfate), and a Prussian blue material. For example, the positive electrode active material may be one or more selected from the group consisting of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material having a general formula XₚM'_{q}(PO₄)ᵣOₓY₃₋ₓ. In a general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X is one or more selected from the group consisting of H⁺, Li⁺, Na⁺, K⁺, and NH₄⁺, M' is a transition metal, and optionally, is one or more selected from the group consisting of V, Ti, Mn, Fe, Co, Ni, Cu, and Zn, and Y is a halogen atom, and optionally, is one or more selected from the group consisting of F, Cl, and Br.

The modified compounds of the positive electrode active materials may be obtained by performing doping modification and/or surface coating modification on the positive electrode active material.

When the battery cell is a lithium-sulfur battery cell or a sodium-sulfur battery cell, the positive electrode active material may be, but is not limited to, one or more selected from the group consisting of elemental sulfur, a sulfur-carbon composite material, a sulfur-conductive polymer composite material, and a sulfur-metal oxide composite material.

In some embodiments, the positive electrode film layer may further optionally include a positive electrode conductive agent. A type of the positive electrode conductive agent is not particularly limited in this application. For example, the positive electrode conductive agent is one or more selected from the group consisting of superconducting carbon, conductive graphite, acetylene black, carbon black, Ketjen black, carbon dots, carbon nanotubes, graphene, and carbon nanofibers.

In some embodiments, the positive electrode film layer may further optionally include a positive electrode binder. A type of the positive electrode binder is not particularly limited in this application. For example, the positive electrode binder may be one or more selected from the group consisting of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may use a metal foil or a composite current collector. As an example of the metal foil, an aluminum foil may be used. The composite current collector may include a polymer material base layer and a layer of a metal material formed on at least one surface of the polymer material base layer. For example, the metal material may be one or more selected from the group consisting of aluminum, aluminum alloy, nickel, nickel alloy, titanium, titanium alloy, silver, and silver alloy. For example, the polymer material base layer may be one or more selected from the group consisting of polypropylene (PP), polyethylene terephthalate (PET), polybutylene terephthalate (PBT), polystyrene (PS), and polyethylene (PE).

The positive electrode film layer may be usually formed by coating positive electrode slurry on the positive electrode current collector and performing drying and cold pressing. The positive electrode slurry is usually formed by dispersing the positive electrode active material, an optional conductive agent, an optional binder, and any other components in a solvent and performing stirring uniformly. The solvent may be N-methylpyrrolidone (NMP), but is not limited thereto.

### [Negative electrode plate]

In some embodiments, the negative electrode plate may include a negative electrode current collector and a first metal layer arranged on at least one surface of the negative electrode current collector. A metal element in the first metal layer may be one or more selected from the group consisting of alkali metal elements, alkaline earth metal elements, zinc, and aluminum.

In some embodiments, a metal material in the first metal layer may be one or more selected from the group consisting of lithium, a lithium alloy, sodium, a sodium alloy, potassium, a potassium alloy, magnesium, a magnesium alloy, zinc, a zinc alloy, aluminum, and an aluminum alloy.

The lithium alloy may be an alloy formed of lithium and another metallic element or non-metallic element. As an example, the another metallic element in the lithium alloy may be one or more elements selected from the group consisting of tin, zinc, aluminum, magnesium, silver, gold, gallium, indium, and platinum, and the non-metallic element in the lithium alloy may be one or more selected from the group consisting of boron, carbon, and silicon.

The sodium alloy may be an alloy formed of sodium and another metallic element or non-metallic element. As an example, the another metallic element in the sodium alloy may be one or more elements selected from the group consisting of tin, zinc, aluminum, magnesium, silver, gold, gallium, indium, and platinum, and the non-metallic element in the sodium alloy may be one or more selected from the group consisting of boron, carbon, and silicon.

The potassium alloy may be an alloy formed of magnesium and another metallic element or non-metallic element. As an example, the another metallic element in the magnesium alloy may be one or more elements selected from the group consisting of tin, zinc, aluminum, sodium, lithium, silver, gold, gallium, indium, and platinum, and the non-metallic element in the potassium alloy may be one or more selected from the group consisting of boron, carbon, and silicon.

The magnesium alloy may be an alloy formed between magnesium and another metallic element or non-metallic element. As an example, the another metallic element in the magnesium alloy may be one or more elements selected from the group consisting of tin, zinc, aluminum, sodium, lithium, silver, gold, gallium, indium, and platinum, and the non-metallic element in the magnesium alloy may be one or more selected from the group consisting of boron, carbon, and silicon.

The zinc alloy may be an alloy formed of zinc and another metallic element or non-metallic element. As an example, the another metallic element in the zinc alloy may be one or more elements selected from the group consisting of tin, lithium, sodium, aluminum, magnesium, silver, gold, gallium, indium, and platinum, and the non-metallic element in the zinc alloy may be one or more selected from the group consisting of boron, carbon, and silicon.

The aluminum alloy may be an alloy formed between aluminum and another metallic element or non-metallic element. As an example, the another metallic element in the aluminum alloy may be one or more elements selected from the group consisting of tin, zinc, lithium, sodium, magnesium, silver, gold, gallium, indium, and platinum, and the non-metallic element in the aluminum alloy may be one or more selected from the group consisting of boron, carbon, and silicon.

In some embodiments, the negative electrode plate may include the negative electrode current collector and not include the first metal layer to form an anode-free metal battery cell through assembly.

In some embodiments, the negative electrode current collector may include a metal foil, a three-dimensional porous current collector, or a composite current collector. As an example of the metal foil, a copper foil, a copper alloy foil, a nickel foil, or a nickel alloy foil may be used. As an example of the three-dimensional porous current collector, a copper mesh, a nickel mesh, foamed copper, or foamed nickel may be used. The composite current collector may include a polymer material base layer and a layer of a metal material formed on at least one surface of the polymer material base layer. For example, the metal material may be one or more selected from the group consisting of copper, copper alloy, nickel, nickel alloy, titanium, titanium alloy, silver, and silver alloy. For example, the polymer material base layer may be one or more selected from the group consisting of polypropylene (PP), polyethylene terephthalate (PET), polybutylene terephthalate (PBT), polystyrene (PS), and polyethylene (PE).

In some embodiments, a conductive coating may be formed on the surface of the negative electrode current collector to facilitate uniform metal deposition. The conductive coating may include conductive carbon. The conductive carbon may be one or more selected from the group consisting of carbon fibers, carbon nanotubes, graphene, and fullerene.

### [Separator]

The battery cell may include a separator. The separator may be arranged between the positive electrode plate and the negative electrode plate to mainly play a role in preventing an internal short circuit. The type of the separator is not particularly limited in this application, and any well-known separator with a porous structure having good chemical stability and mechanical stability may be selected.

In some embodiments, the material of the separator may be one or more selected from the group consisting of glass fiber, non-woven cloth, polyethylene, polypropylene, polyvinylidene fluoride, and polyimide. The separator may be a single layer film or a multilayer composite film. When the separator is a multilayer composite film, materials of the layers are the same or different.

The manufacturing method of the battery cell is well-known. In some embodiments, the positive electrode plate, the separator, the negative electrode plate, and the electrolyte solution may be assembled to form the battery cell. As an example, the positive electrode plate, the separator, and the negative electrode plate may be formed into an electrode assembly via a winding process and/or a stacking process. The electrode assembly is placed in an outer packaging, dried, and injected with the aforementioned electrolyte solution. Through subsequent procedures such as vacuum sealing, resting, formation, and shaping, the battery cell is obtained. A plurality of battery cells may be connected in series, parallel, or series-parallel to form a battery module. A plurality of battery modules may be connected in series, parallel, or series-parallel to form a battery pack. In some embodiments, the plurality of battery cells may directly form a battery pack.

### Power consuming apparatus

An embodiment of this application further provides a power consuming apparatus. The power consuming apparatus is one or more selected from the group consisting of the battery cell, the battery module, or the battery pack provided in the embodiments of this application. The battery cell, the battery module, or the battery pack may be used as a power source of the power consuming apparatus, or may be used as an energy storage unit of the power consuming apparatus. The power consuming apparatus may be, but is not limited to, a mobile device (for example, a mobile phone, a tablet computer, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

The battery cell, the battery module, or the battery pack may be selected according to use requirements of the power consuming apparatus.

FIG. 6 is a schematic diagram of a power consuming apparatus as an example. The power consuming apparatus may be a pure electric vehicle, a hybrid electric vehicle, a plug-in hybrid electric vehicle, or the like. To meet the requirements of the power consuming apparatus for high power and high energy density, a battery pack or a battery module may be used.

For another example, the power consuming apparatus may be a mobile phone, a tablet computer, a notebook computer, or the like. The power consuming apparatus usually needs to be light and thin, and a battery cell may be used as a power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Synthesis of a first electrolyte salt (composed of a first anion and a first cation)

This application exemplarily provides several preparation methods of the first electrolyte salt. Other first electrolyte salts may be prepared by referring to the exemplary methods. According to the exemplary compound preparation methods, a person skilled in the art can readily obtain specific methods for implementing each synthetic step from relevant scientific literature or standard textbooks in the field. Unless otherwise specified, compounds that are commercially available or known in the literature are used as starting materials for synthesis. A person skilled in the art of organic synthesis will recognize that the nature and order of the proposed synthetic steps may be altered to optimize the production of the compounds described herein.

The processes in this application can be monitored by any suitable methods known in the art. For example, the formation of products can be monitored by spectroscopic methods such as nuclear magnetic resonance (NMR) spectroscopy (e.g., ¹H, ¹³C, ¹⁹F, ¹¹B, or ³¹P), infrared (IR) spectroscopy, and mass spectrometry (MS).

### Synthesis of a first electrolyte salt I-3

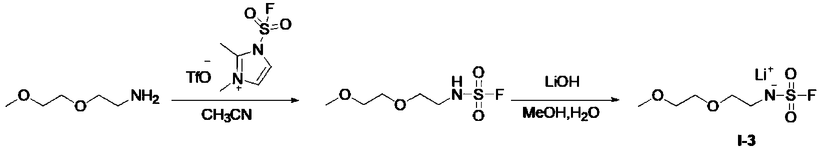

1-(2-Aminoethoxy)-2-methoxyethane (10.0 g, 83.92 mmol) and 1-(fluorosulfonyl)-2,3-dimethyl-1H-imidazol-3-ium trifluoromethanesulfonate (27.55 g, 83.92 mmol) were weighed and added to a 500 mL single-necked flask, followed by the addition of 300 mL of acetonitrile. The mixture was stirred at 25°C for 2 h. Upon completion of the reaction, the mixture was concentrated under reduced pressure to remove the acetonitrile. The resulting mixture was then extracted with water (30 mL) and ethyl acetate (30 mL×2). The combined organic phases were washed with water (20 mL) and saturated brine (10 mL × 2), separated, dried over anhydrous magnesium sulfate, filtered, and concentrated under reduced pressure to afford 16.87 g of the intermediate product. The yield is approximately 100%.

¹H NMR (DMSO-*d₆*, 400 MHz), δ (ppm): 3.63 (m, 2H), 3.54 (m, 4H), 3.24 (s, 3H), 2.28 (m, 2H).

¹³C NMR (DMSO-*d₆*, 100 MHz), δ (ppm): 73.1, 70.4, 70.3, 53.9, 37.2.

¹⁹F NMR (DMSO-*d₆*, 376 MHz), δ (ppm): -69.7.

HRMS (ESI⁺) m/z [M]⁺caled.for C₅H₁₂FNO₄S: 201.0471, found: 201.0465.

The intermediate product (2.0 g, 9.95 mmol) was weighed and added to a 25 mL single-necked flask, followed by the addition of 10 mL of methanol. The mixture was cooled to below 10°C, and an aqueous lithium hydroxide solution (LiOH: 0.238 g, 9.95 mmol; water: 0.5 mL) was added dropwise. Upon completion of the addition, the temperature was raised to 55°C, the mixture was stirred for 5 h until the disappearance of the N-H chemical shift. Upon completion of the reaction, the mixture was concentrated under reduced pressure to remove methanol, filtered, and dried to afford 1.31 g of the first electrolyte salt I-3. The yield is 63.52%.

¹H NMR (DMSO-*d₆*, 400 MHz), δ (ppm): 3.54 (m, 4H), 3.40 (m, 2H), 3.24 (s, 3H), 1.50 (m, 2H).

### Synthesis of a first electrolyte salt 1-5

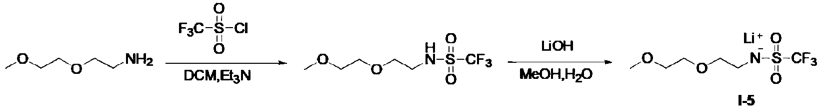

1-(2-aminoethoxy)-2-methoxyethane (10.0 g, 83.92 mmol) and triethylamine (8.5 g, 83.92 mmol) were weighed and added to a 250 mL three-necked flask, followed by the addition of 100 mL of super-dry dichloromethane (DCM). The mixture was cooled to 0°C, and trifluoromethanesulfonyl chloride (14.2 g, 83.92 mmol) was added dropwise. Upon completion of the addition, the temperature was raised to 25°C, and the mixture was stirred overnight. Upon completion of the reaction, the mixture was concentrated under reduced pressure to remove the dichloromethane. The resulting mixture was then extracted with water (30 mL) and ethyl acetate (30 mL×2). The combined organic phases were washed with water (20 mL) and saturated brine (10 mL × 2), separated, dried over anhydrous magnesium sulfate, filtered, and concentrated under reduced pressure to afford 21.0 g of the intermediate product. The yield is approximately 100%.

¹H NMR (DMSO-*d₆*, 400 MHz), δ (ppm): 9.51 (s, 1H), 3.65 (m, 2H), 3.58 (m, 4H), 3.26 (s, 3H), 2.24 (m, 2H).

¹³C NMR (DMSO-*d₆*, 100 MHz), δ (ppm): 149.4, 73.1, 70.7, 70.3, 53.9, 41.5.

¹⁹F NMR (DMSO-*d₆*, 376 MHz), δ(ppm): -77.37.

HRMS(ESI⁺) m/z [M]⁺caled.for C₆H₁₂F₃NO₄S: 251.0439, found: 251.0443.

The intermediate product (2.0 g, 7.96 mmol) was weighed and added to a 25 mL single-necked flask, followed by the addition of 10 mL of methanol. The mixture was cooled to below 10°C, and an aqueous lithium hydroxide solution (LiOH: 0.19 g, 7.96 mmol; water: 0.4 mL) was added dropwise. Upon completion of the addition, the temperature was raised to 55°C, the mixture was stirred for 3 h until the disappearance of the N-H chemical shift. Upon completion of the reaction, the mixture was concentrated under reduced pressure to remove methanol, filtered, and dried to afford 1.48 g of the first electrolyte salt I-5. The yield is 72.38%.

¹H NMR (DMSO-*d₆*, 400 MHz), δ (ppm): 3.58 (m, 4H), 3.42 (m, 2H), 3.26 (s, 3H), 1.52 (m, 2H).

### Synthesis of a first electrolyte salt I-8

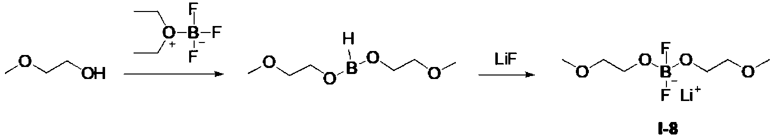

Boron trifluoride diethyl etherate (9.51 g, 67.0 mmol) and 100 mL of diethyl ether were weighed and added to a 250 mL three-necked flask under an argon atmosphere, followed by the addition of additional 100 mL of diethyl ether. The mixture was cooled to 0°C, and ethylene glycol monomethyl ether (10.0 g, 131.42 mmol) was added dropwise. Upon completion of the addition, the temperature was raised to 25°C, and the mixture was stirred for 40 h. Upon completion of the reaction, the mixture was concentrated under reduced pressure to remove the diethyl ether, and then the intermediate product was obtained by distillation under reduced pressure.

¹H NMR (DMSO-*d₆*, 400 MHz), δ (ppm): 3.70 (m, 4H), 3.56 (m, 4H), 3.24 (s, 6H).

¹³C NMR (DMSO-*d₆*, 100 MHz), δ (ppm): 75.8, 63.6, 53.9.

¹¹B NMR (DMSO-*d₆*, 128 MHz), δ (ppm): 3.7.

HRMS (ESI⁺) m/z [M]⁺caled.for C₆H₁₅BO₄: 162.1063, found:162.1048.

The intermediate product (3 g, 18.51 mmol) and lithium fluoride (0.72 g, 27.76 mmol) were weighed and added to a 50 mL polytetrafluoroethylene-lined autoclave, and then dissolved in 20 mL of hydrofluoric acid, and the mixture was stirred at 50°C for 18 h. Upon completion of the reaction, the mixture was neutralized with lithium carbonate, followed by dissolution in 1,2-dimethoxyethane. The solution was filtered, concentrated, and triturated with a mixture of ethyl acetate and petroleum ether (1:25, m:m). The resulting solid was filtered and dried under vacuum at 45°C to afford 2.72 g of the first electrolyte salt I-8. The yield is 71.30%.

¹H NMR (DMSO-*d₆*, 400 MHz), δ (ppm): 3.70 (m, 4H), 3.56 (m, 4H), 3.24 (s, 6H).

¹³C NMR (DMSO-*d₆*, 100 MHz), δ (ppm): 76.0, 53.9, 44.0.

¹⁹F NMR (DMSO-*d₆*, 376 MHz), δ (ppm): -148.7.

¹¹B NMR (DMSO-*d₆*, 128 MHz), δ (ppm): 3.37.

HRMS (ESI⁺) m/z [M]⁺caled.for C₆H₁₄BF₂LiO₄: 206.1113, found: 206.1149.

### Synthesis of a first electrolyte salt 1-9

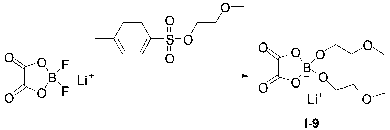

Lithium difluoro(oxalato)borate (3.0 g, 20.87 mmol) and (2-methoxyethyl) p-toluenesulfonate (10.1 g, 43.82 mmol) were weighed and added to a 250 mL three-necked flask, and the mixture was dissolved in 100 mL of acetonitrile and stirred at 50°C for 28 h under an argon atmosphere. Upon completion of the reaction, the mixture was concentrated under reduced pressure to remove acetonitrile. Finally, recrystallization was performed to afford 2.37 g of the first electrolyte salt I-9. The yield is 44.39%.

¹H NMR (DMSO-*d₆*, 400 MHz), δ (ppm): 3.70 (m, 4H), 3.56 (m, 4H), 3.24 (s, 6H).

¹³C NMR (DMSO-*d₆*, 100 MHz), δ (ppm): 161.0, 76.0, 53.9, 46.0.

HRMS (ESI⁺) m/z [M]⁺calcd.for C₈H₁₄BLiO₈: 256.0942, found: 256.0931.

### Synthesis of a first electrolyte salt I-II

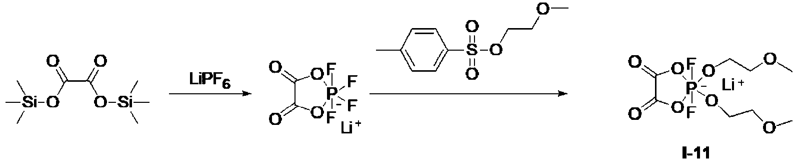

Lithium hexafluorophosphate (10.0 g, 65.83 mmol) was weighed and added to a 250 mL three-necked flask, followed by the addition of 140 mL of acetonitrile to dissolve the solid. Under an argon atmosphere, a solution of bis(trimethylsilyl) oxalate (15.74 g, 67.14 mmol) in 30 mL of acetonitrile was added dropwise at 40°C to 45°C. Upon completion of the addition, the mixture was stirred at 40°C to 45°C for 30 h. Upon completion of the reaction, the mixture was concentrated under reduced pressure to remove acetonitrile, and was finally dried under vacuum at 40°C to 45°C to afford 12.52 g of the intermediate product. The yield is 94.21%.

¹⁹F NMR (DMSO-*d₆*, 376 MHz), δ (ppm): -78.3.

³¹P NMR (DMSO-*d₆*, 160 MHz), δ (ppm): -143.7.

HRMS (ESI⁺) m/z [M]⁺caled.for C₂F₄LiO₄P: 201.9630, found: 201.9659.

The intermediate product (3.0 g, 14.85 mmol) and (2-methoxyethyl) p-toluenesulfonate (7.18 g, 31.19 mmol) weighed and added to a 250 mL three-necked flask, and the mixture was dissolved in 100 mL of acetonitrile and stirred at 50°C for 20 h under an argon atmosphere. Upon completion of the reaction, the mixture was concentrated under reduced pressure to remove acetonitrile. Finally, recrystallization was performed to afford 1.95 g of the first electrolyte salt I-11. The yield is 40.18%.

¹H NMR (DMSO-*d₆*, 400 MHz), δ (ppm): 3.70 (m, 4H), 3.56 (m, 4H), 3.24 (s, 6H).

¹³C NMR (DMSO-*d₆*, 100 MHz), δ (ppm): 161.0, 76.0, 53.9, 32.0.

¹⁹F NMR (DMSO-*d₆*, 376 MHz), δ (ppm): -64.8.

³¹P NMR (DMSO-*d₆*, 160 MHz), δ (ppm): -139.2.

HRMS(ESI⁺) m/z [M]⁺caled.for C₈H₁₄F₂LiO₈P: 314.0554, found: 314.0528.

### Example 1

### (1) Preparation of an electrolyte solution

A first solvent 1,2-dimethoxyethane (DME) and a second solvent trifluoromethoxybenzene in a weight ratio of 1:1 were taken and mixed thoroughly to form a solvent. 1.77 g of a first electrolyte salt containing the anion shown in I-3 and lithium ions and 0.4675 g of a second electrolyte salt, lithium bis(fluorosulfonyl)imide (LiFSI) were added to 5 ml of the solvent. The mixture was stirred thoroughly to form a colorless and transparent electrolyte solution.

### (2) Manufacturing of a positive electrode plate

A positive electrode active material NCM811, a conductive agent acetylene black, and a binder PVDF were mixed in a weight ratio of 98:1:1. The mixture was added to a solvent NMP and stirred until a homogeneous system is formed to obtain a positive electrode slurry with a solid content of 70%. The positive electrode slurry was uniformly coated onto both surfaces of a positive electrode current collector aluminum foil. After air-drying, the coated foil was transferred to an oven for further drying. Finally, the dried foil was cut into 40 mm×50 mm rectangular pieces to serve as positive electrode plates for later use.

### (3) Manufacturing of a negative electrode plate

A 50 µm-thick lithium foil was laminated with a 12 µm-thick copper foil through roll pressing. The composite was then cut into 41 mm×51 mm rectangular pieces to serve as negative electrode plates for later use.

### (4) Manufacturing of a separator

A polyethylene porous membrane was cut into 45 mm × 55 mm rectangular pieces to serve as separators for later use.

### (5) Manufacturing of a battery

One cut positive electrode plate was stacked with two cut negative electrode plates, and the positive electrode plate and the negative electrode plates were separated by separators to form an electrode assembly. The electrode assembly was placed in an aluminum-laminated film pouch, followed by injection of 0.30 g of the prepared electrolyte solution, a battery is obtained after procedures such as vacuum hot-press sealing and resting (at least 6 hours). The battery has a rated capacity of 140 mAh.

### Cycle life test

At 25°C, the manufactured battery was charged at a constant current of 0.2C (28 mA) to 4.3 V, followed by constant voltage charging until the current dropped to 0.1C (14 mA). At this point, the battery is fully charged, and the charging capacity at this point was recorded as the 1st-cycle charge capacity. After resting for 5 minutes, the battery was discharged at a constant current of 1C (140 mA) to 2.8 V, completing one charge-discharge cycle. The discharge capacity at this point was recorded as the 1st-cycle discharge capacity. The battery was subjected to a cyclic charge-discharge test according to the foregoing method, and the discharge capacity after each cycle was recorded until the discharge capacity of the battery decayed to 80% of the 1st-cycle discharge capacity, and a quantity of cycles at this point was used to characterize the cycle life of the battery.

### Test of a consumption rate of an electrolyte solution

Electrolyte solution injection amounts were set to 0.15 g, 0.20 g, 0.25 g, and 0.30 g respectively to perform the aforementioned cycle life tests to obtain the cycle life of the battery under different electrolyte solution injection amounts. The cycle life (as the vertical axis) of the battery was plotted against the electrolyte solution injection volume (as the horizontal axis, unit: g), followed by linear fitting to derive a slope k (cycles/g).

A consumption rate r of the electrolyte solution may be calculated using the following formula: r (mg/Ah/cycle) = 1000/(k × 0.14).

### Examples 2 to 49

Manufacturing methods and test methods of the batteries are similar to those in Embodiment 1, and differences lie in difference compositions of the electrolyte solution. For details, refer to Table 1. First electrolyte salts are all formed by corresponding first anions and lithium ions). PS represents propane sultone, DTD represents ethylene sulfate, ES represents ethylene sulfite, and TMSP represents tris(trimethylsilyl) phosphate. The content of an additive is based on a total weight of an electrolyte solution.

### Comparative example 1

A manufacturing method and a test method of the battery are similar to those in Embodiment 1, and differences lie in difference compositions of the electrolyte solution.

1.52 g of lithium hexafluorophosphate was added to 5 mL of a mixed solvent composed of ethylene carbonate (EC) and ethyl methyl carbonate (EMC) in a 1:1 weight ratio. The mixture was stirred thoroughly to form a colorless and transparent electrolyte solution.

### Comparative example 2

A manufacturing method and a test method of the battery are similar to those in Embodiment 1, and differences lie in difference compositions of the electrolyte solution.

0.4675 g of a lithium bis(fluorosulfonyl)imide salt was added to 5 mL of a mixed solvent composed of 1,2-dimethoxyethane (DME) and trifluoromethoxybenzene in a 1:1 weight ratio. The mixture was stirred thoroughly to form a colorless and transparent electrolyte solution.

**Table 1**

| No. | First anio n | Concentrat ion *(mol*/*L)* of the first electrolyte salt | Second electro lyte salt | Concentrat ion *(mol*/*L)* of the second electrolyte salt | First solvent | Second solvent | Weight ratio of the first solvent to the second solvent | Additi ve | Conten t of the additiv e | Cycle life (cycles ) | Consumpt ion rate of the electrolyte solution (mg/Ah/c ycle) |
|---|---|---|---|---|---|---|---|---|---|---|---|
| Example 1 | I-3 | 2 | LiFSI | 0.5 | DME | Trifluoromethoxyb enzene | 1:1 | - | - | 728 | 2.53 |
| Example 2 | I-4 | 2 | LiFSI | 0.5 | DME | Trifluoromethoxyb enzene | 1:1 | - | - | 717 | 2.56 |
| Example 3 | I-8 | 2 | LiFSI | 0.5 | DME | Trifluoromethoxyb enzene | 1:1 | - | - | 711 | 2.56 |
| Example 4 | I-9 | 2 | LiFSI | 0.5 | DME | Trifluoromethoxyb enzene | 1:1 | - | - | 719 | 2.54 |
| Example 5 | I-1 | 2 | LiFSI | 0.5 | DME | Trifluoromethoxyb enzene | 1:1 | - | - | 527 | 3.39 |
| Example 6 | I-6 | 2 | LiFSI | 0.5 | DME | Trifluoromethoxyb enzene | 1:1 | - | - | 496 | 3.61 |
| Example 7 | I-7 | 2 | LiFSI | 0.5 | DME | Trifluoromethoxyb enzene | 1:1 | - | - | 501 | 3.59 |
| Example 8 | I-11 | 2 | LiFSI | 0.5 | DME | Trifluoromethoxyb enzene | 1:1 | - | - | 452 | 3.95 |
| Example 9 | I-3 | 0.2 | LiFSI | 0.5 | DME | Trifluoromethoxyb enzene | 1:1 | - | - | 422 | 4.23 |
| Example 10 | I-3 | 0.5 | LiFSI | 0.5 | DME | Trifluoromethoxyb enzene | 1:1 | - | - | 459 | 3.93 |
| Example 11 | I-3 | 1 | LiFSI | 0.5 | DME | Trifluoromethoxyb enzene | 1:1 | - | - | 519 | 3.41 |
| Example 12 | I-3 | 1.5 | LiFSI | 0.5 | DME | Trifluoromethoxyb enzene | 1:1 | - | - | 636 | 2.81 |
| Example 13 | I-3 | 2.5 | LiFSI | 0.5 | DME | Trifluoromethoxyb enzene | 1:1 | - | - | 712 | 2.55 |
| Example 14 | I-3 | 3 | LiFSI | 0.5 | DME | Trifluoromethoxyb enzene | 1:1 | - | - | 698 | 2.63 |
| Example 15 | I-3 | 4 | LiFSI | 0.5 | DME | Trifluoromethoxyb enzene | 1:1 | - | - | 521 | 3.42 |
| Example 16 | I-3 | 6 | LiFSI | 0.5 | DME | Trifluoromethoxyb enzene | 1:1 | - | - | 419 | 4.24 |
| Example 17 | I-3 | 2 | LiDFO B | 0.5 | DME | Trifluoromethoxyb enzene | 1:1 | - | - | 725 | 2.53 |
| Example 18 | I-3 | 2 | LiBOB | 0.5 | DME | Trifluoromethoxyb enzene | 1:1 | - | - | 577 | 3.09 |
| Example 19 | I-3 | 2 | LiPF₆ | 0.5 | DME | Trifluoromethoxyb enzene | 1:1 | - | - | 428 | 4.22 |
| Example 20 | I-3 | 2 | - | - | DME | Trifluoromethoxyb enzene | 1:1 | - | - | 601 | 2.83 |
| Example 21 | I-3 | 2 | LiFSI | 0.2 | DME | Trifluoromethoxyb enzene | 1:1 | - | - | 656 | 2.77 |
| Example 22 | I-3 | 2 | LiFSI | 1 | DME | Trifluoromethoxyb enzene | 1:1 | - | - | 659 | 2.76 |
| Example 23 | I-3 | 2 | LiFSI | 2 | DME | Trifluoromethoxyb enzene | 1:1 | - | - | 566 | 3.12 |
| Example 24 | I-3 | 2 | LiFSI | 4 | DME | Trifluoromethoxyb enzene | 1:1 | - | - | 476 | 4.00 |
| Example 25 | I-3 | 2 | LiFSI | 6 | DME | Trifluoromethoxyb enzene | 1:1 | - | - | 402 | 4.44 |
| Example 26 | I-3 | 2 | LiFSI | 0.5 | 1,2-diethoxyetha ne | Trifluoromethoxyb enzene | 1:1 | - | - | 721 | 2.53 |
| Example 27 | I-3 | 2 | LiFSI | 0.5 | Tetrahydrofu ran | Trifluoromethoxyb enzene | 1:1 | - | - | 515 | 3.43 |
| Example 28 | I-3 | 2 | LiFSI | 0.5 | Diethyl ether | Trifluoromethoxyb enzene | 1:1 | - | - | 444 | 4.05 |
| Example 29 | I-3 | 2 | LiFSI | 0.5 | EC | Trifluoromethoxyb enzene | 1:1 | - | - | 388 | 4.60 |
| Example 30 | I-3 | 2 | LiFSI | 0.5 | DME | Trifluoromethoxyb enzene | 0.05:1 | - | - | 376 | 4.75 |
| Example 31 | I-3 | 2 | LiFSI | 0.5 | DME | Trifluoromethoxyb enzene | 0.1:1 | - | - | 424 | 4.03 |
| Example 32 | I-3 | 2 | LiFSI | 0.5 | DME | Trifluoromethoxyb enzene | 0.3:1 | - | - | 481 | 3.99 |
| Example 33 | I-3 | 2 | LiFSI | 0.5 | DME | Trifluoromethoxyb enzene | 0.5:1 | - | - | 599 | 2.98 |
| Example 34 | I-3 | 2 | LiFSI | 0.5 | DME | Trifluoromethoxyb enzene | 1.5:1 | - | - | 677 | 2.64 |
| Example 35 | I-3 | 2 | LiFSI | 0.5 | DME | Trifluoromethoxyb enzene | 3:1 | - | - | 553 | 3.23 |
| Example 36 | I-3 | 2 | LiFSI | 0.5 | DME | Trifluoromethoxyb enzene | 10:1 | - | - | 478 | 4.01 |
| Example 37 | I-3 | 2 | LiFSI | 0.5 | DME | Trifluoromethoxyb enzene | 20:1 | - | - | 449 | 4.05 |
| Example 38 | I-3 | 2 | LiFSI | 0.5 | DME | - | - | - | - | 410 | 4.21 |
| Example 39 | I-3 | 2 | LiFSI | 0.5 | DME | 1,1,2,2-tetrafluoroethyl 2,2,3,3-tetrafluoropropyl ether | 1:1 | - | - | 733 | 2.51 |
| Example 40 | I-3 | 2 | LiFSI | 0.5 | DME | 1,2-bis(1,1,2,2-tetrafluoroethoxy)e thane | 1:1 | - | - | 746 | 2.48 |
| Example 41 | I-3 | 2 | LiFSI | 0.5 | DME | Decafluoropentane | 1:1 | - | - | 503 | 3.59 |
| Example 42 | I-3 | 2 | LiFSI | 0.5 | DME | Fluorobenzene | 1:1 | - | - | 398 | 4.58 |
| Example 43 | I-3 | 2 | LiFSI | 0.5 | DME | Trifluoromethoxyb enzene | 1:1 | PS | 0.50% | 739 | 2.51 |
| Example 44 | I-3 | 2 | LiFSI | 0.5 | DME | Trifluoromethoxyb enzene | 1:1 | ES | 0.50% | 731 | 2.53 |
| Example 45 | I-3 | 2 | LiFSI | 0.5 | DME | Trifluoromethoxyb enzene | 1:1 | TMSP | 0.50% | 722 | 2.54 |
| Example 46 | I-3 | 2 | LiFSI | 0.5 | DME | Trifluoromethoxyb enzene | 1:1 | PS | 1% | 658 | 2.71 |
| Example 47 | I-3 | 2 | LiFSI | 0.5 | DME | Trifluoromethoxyb enzene | 1:1 | PS | 3% | 587 | 3.04 |
| Example 48 | I-3 | 2 | LiFSI | 0.5 | DME | Trifluoromethoxyb enzene | 1:1 | PS | 5% | 529 | 3.37 |
| Example 49 | I-3 | 2 | LiFSI | 0.5 | DME | Trifluoromethoxyb enzene | 1:1 | PS | 10% | 466 | 4.02 |
| Compara tive example 1 | - | - | LiPF₆ | 1 | EC | EMC | 1:1 | - | - | 127 | 14.06 |
| Compara tive example 2 | - | - | LiFSI | 0.5 | DME | Trifluoromethoxyb enzene | 1:1 | - | - | 248 | 7.20 |

The combined test results of Examples 1 to 49 and Comparative examples 1 and 2 demonstrate that the electrolyte solution provided in Examples 1 to 49 can reduce consumption rate of the electrolyte solution and extend the cycle life of the battery.

The combined test results of Examples 1 to 8 further demonstrate that when the first anion is I-3, I-4, I-8, or I-9, the consumption rate of the electrolyte solution can be further reduced, and the cycle life of the battery can be further extended. In this case, the R² groups in the first anion contain two oxygen atoms and the two oxygen atoms are separated by a suitable distance, thereby facilitating better binding with lithium ions, can further enhance the overall stability and reductive stability of the first anion, thereby further reducing the decomposition-induced consumption of the first anion, and delay the depletion of the electrolyte solution, thereby further extending the cycle life of the battery.

The combined test results of Examples 1 and 9 to 16 further demonstrate that when the molar concentration of the first anion ranges from 0.5 mol/L to 4 mol/L, optionally, ranges from 1 mol/L to 3.5 mol/L, and further optionally, range from 1.5 mol/L to 3 mol/L, the consumption rate of the electrolyte solution can be further reduced, and the cycle life of the battery can be further extended.

The combined test results of Examples 1 and 17 to 19 further demonstrate that when the second anion is bis(trifluoromethanesulfonyl)imide anions (TFSI⁻) or difluoro(oxalato)borate anions (DFOB⁻), the consumption rate of the electrolyte solution can be further reduced, and the cycle life of the battery can be further extended.

The combined test results of Examples 1 and 20 to 25 further demonstrate that when the electrolyte solution further includes the second anion and the molar concentration of the second anion is less than or equal to 4 mol/L, optionally, is less than or equal to 2 mol/L, or further optionally, is less than or equal to 1 mol/L, the consumption rate of the electrolyte solution can be further reduced, and the cycle life of the battery can be further extended.

The combined test results of Examples 1 and 26 to 29 further demonstrate that when the first solvent is 1,2-dimethoxyethane or 1,2-diethoxyethane, the consumption rate of the electrolyte solution can be further reduced, and the cycle life of the battery can be further extended.

The combined test results of Example 1 and 30 to 38 further demonstrate that when the solvent includes a mixture of the first solvent and the second solvent and the weight ratio of the first solvent to the second solvent optionally ranges from (0.1 to 10):1, optionally, ranges from (0.3 to 3):1, and further optionally, ranges from (0.5 to 1.5):1, the consumption rate of the electrolyte solution can be further reduced, and the cycle life of the battery can be further extended.

The combined test results of Examples 1 and 39 to 42 further demonstrate that when the second solvents trifluoromethoxybenzene, 1,1,2,2-tetrafluoroethyl-2,2,3,3-tetrafluoropropyl ether, or 1,2-bis(1,1,2,2-tetrafluoroethoxy)ethane, the consumption rate of the electrolyte solution can be further reduced, and the cycle life of the battery can be further extended.

The combined test results of Examples 1 and 43 to 49 further demonstrate that when the electrolyte solution contains an appropriate amount of additives, the cycle life of the battery can be further extended.

It should be noted that this application is not limited to the above-mentioned embodiments. The foregoing embodiments are exemplary only, and any embodiment within the scope of the technical solution of this application that has substantially the same composition and has the same effects as the technical idea is encompassed in the technical scope of this application. In addition, without departing from the scope of the gist of this application, various modifications that can be conceived by those skilled in the art and applied to the embodiments, and other modes constructed by combining some of the components in the embodiments are also encompassed in the scope of this application.

## Claims

1. An electrolyte solution, comprising a first anion represented by Formula (I), 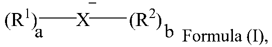 wherein
X is one or more elements selected from the group consisting of N, B, P, Al, Si, S, Cl, As, and Se;
a represents an integer greater than or equal to 1;
b represents an integer greater than or equal to 1;
R¹ groups are each independently one or more selected from the group consisting of halogen atoms, halosulfonyl groups, haloalkylsulfonyl groups, and ester groups (-O-(C=O)-), and any two adjacent R¹ groups together with X optionally form a cyclic structure; and
R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure.

2. The electrolyte solution according to claim 1, wherein the R¹ groups are each independently one or more selected from the group consisting of fluorine atoms, fluorinesulfonyl groups, fluorinealkylsulfonyl groups, and ester groups (-O-(C=O)-), and any two adjacent R¹ groups together with X optionally form a cyclic structure; and
optionally, the R¹ groups are one or more selected from the group consisting of fluorine atoms and the following groups: 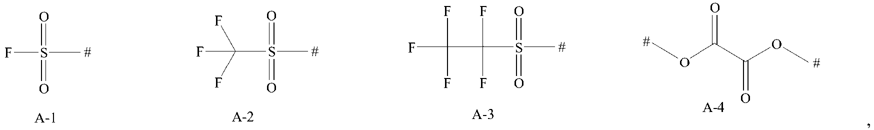 wherein
# represents an attachment point.

3. The electrolyte solution according to claim 1 or 2, wherein the R² groups are each independently one or more selected from the group consisting of C1-C10 oxaalkyl groups, C1-C10 oxacycloalkyl groups, C1-C10 halooxaalkyl groups, and C1-C10 halooxacycloalkyl groups, and any two adjacent R² groups together with X optionally form a cyclic structure; and
optionally, the R² groups are each independently one or more selected from the group consisting of C1-C10 oxaalkyl groups and C1-C10 oxacycloalkyl groups, and any two adjacent R² groups together with X optionally form a cyclic structure.

4. The electrolyte solution according to any one of claims 1 to 3, wherein the R² groups are each independently one or more selected from the group consisting of the following groups: 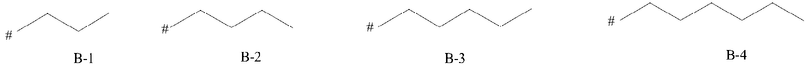 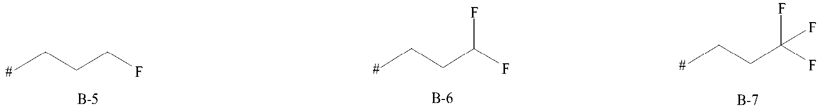 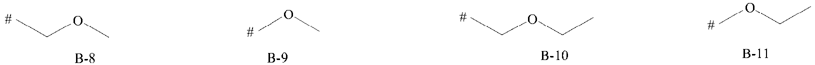 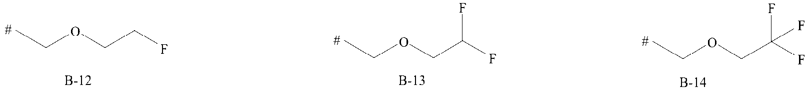 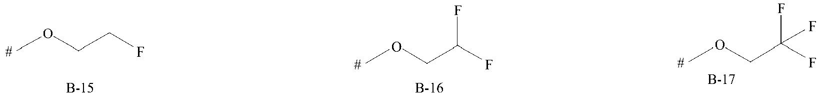 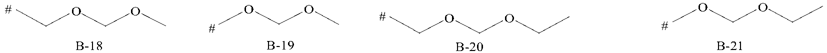 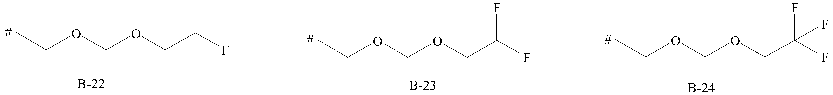 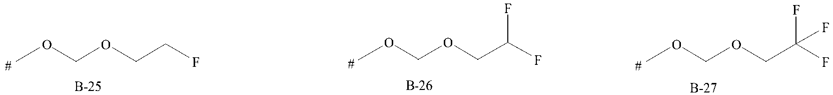 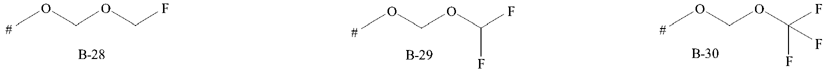 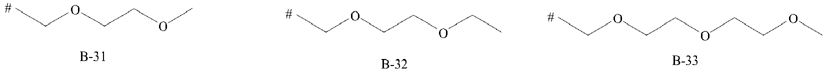 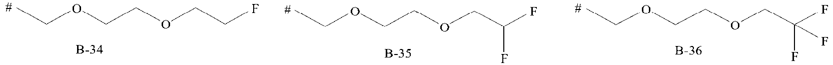 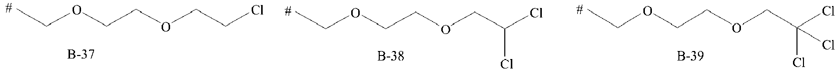 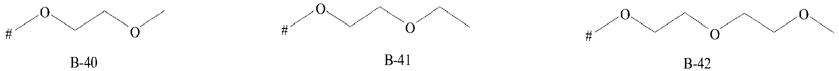 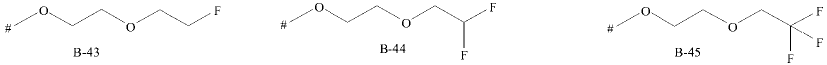 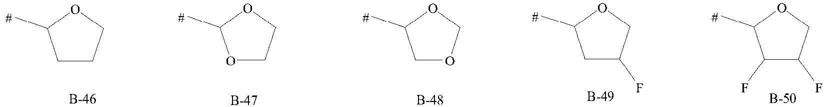 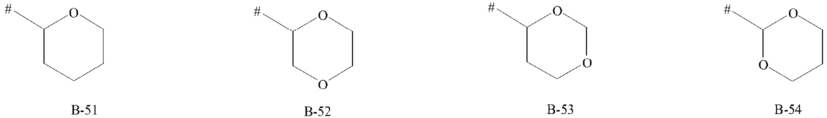 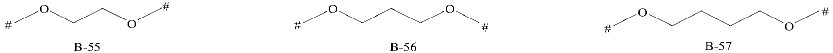 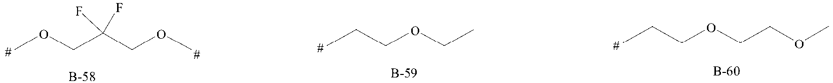 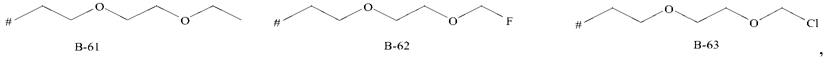 wherein # represents an attachment point; and
optionally, the R² groups are each independently one or more selected from the group consisting of B-31, B-32, B-40, B-41, B-60, and B-61.

5. The electrolyte solution according to any one of claims 1 to 4, wherein X is one or more elements selected from the group consisting of N, B, and P, and optionally, is one or more elements selected from the group consisting of N and B.

6. The electrolyte solution according to any one of claims 1 to 5, wherein
X is N; a is 1, and b is 1;
the R¹ groups are halosulfonyl groups or haloalkylsulfonyl groups, and optionally, are fluorinesulfonyl groups or fluorinealkylsulfonyl groups; and
the R² groups are one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, optionally, are one or more selected from the group consisting of C1-C10 oxaalkyl groups, C1-C10 oxacycloalkyl groups, C1-C10 halooxaalkyl groups, and C1-C10 halooxacycloalkyl groups, and further optionally, are one or more selected from the group consisting of C1-C10 oxaalkyl groups and C1-C10 oxacycloalkyl groups.

7. The electrolyte solution according to any one of claims 1 to 5, wherein
X is B;
a represents an integer greater than or equal to 1, b represents an integer greater than or equal to 1, and a + b = 4, and optionally, a is 2, and b is 2;
the R¹ groups are each independently one or more selected from the group consisting of halogen atoms and ester groups (-O-(C=O)-), and any two adjacent R¹ groups together with X optionally form a cyclic structure, and optionally, the R¹ groups are each independently one or more selected from the group consisting of fluorine atoms and ester groups, and any two adjacent R¹ groups together with X optionally form a cyclic structure; and
the R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure, optionally, the R² groups are each independently are one or more selected from the group consisting of C1-C10 oxaalkyl groups, C1-C10 oxacycloalkyl groups, C1-C10 halooxaalkyl groups, and C1-C10 halooxacycloalkyl groups, and an oxygen atom in the R² groups is directly bonded to X, and further optionally, the R² groups are each independently one or more selected from the group consisting of C1-C10 oxaalkyl groups and C1-C10 oxacycloalkyl groups, and an oxygen atom in the R² groups is directly bonded to X.

8. The electrolyte solution according to any one of claims 1 to 5, wherein
X is P;
a represents an integer greater than or equal to 1, b represents an integer greater than or equal to 1, and a + b = 6, and optionally, a is 4 or 5, and b is 1 or 2;
the R¹ groups are each independently one or more selected from the group consisting of halogen atoms and ester groups (-O-(C=O)-), and any two adjacent R¹ groups together with X optionally form a cyclic structure, and optionally, the R¹ groups are each independently one or more selected from the group consisting of fluorine atoms and ester groups (-O-(C=O)-), and any two adjacent R¹ groups together with X optionally form a cyclic structure; and
the R² groups are each independently one or more selected from the group consisting of C1-C10 alkyl groups, C1-C10 oxaalkyl groups, C3-C10 cycloalkyl groups, C1-C10 oxacycloalkyl groups, C1-C10 haloalkyl groups, C1-C10 halooxaalkyl groups, C3-C10 halocycloalkyl groups, and C1-C10 halooxacycloalkyl groups, and any two adjacent R² groups together with X optionally form a cyclic structure, optionally, the R² groups are each independently are one or more selected from the group consisting of C1-C10 oxaalkyl groups, C1-C10 oxacycloalkyl groups, C1-C10 halooxaalkyl groups, and C1-C10 halooxacycloalkyl groups, and an oxygen atom in the R² groups is directly bonded to X, and further optionally, the R² groups are each independently one or more selected from the group consisting of C1-C10 oxaalkyl groups and C1-C10 oxacycloalkyl groups, and an oxygen atom in the R² groups is directly bonded to X.

9. The electrolyte solution according to any one of claims 1 to 8, wherein the first anion is one or more selected from the group consisting of the following: 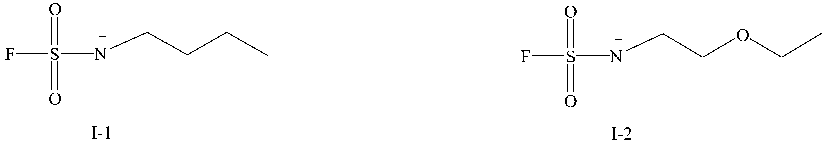 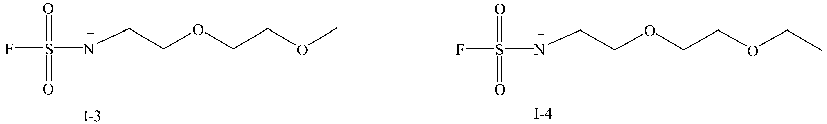 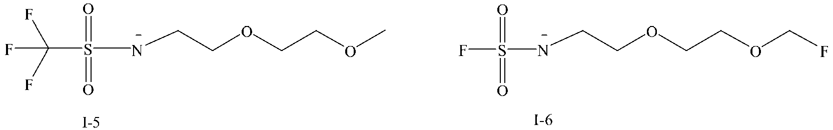 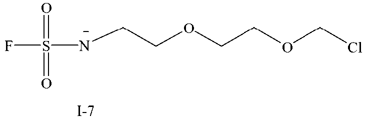 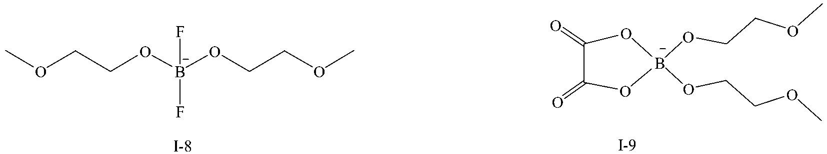 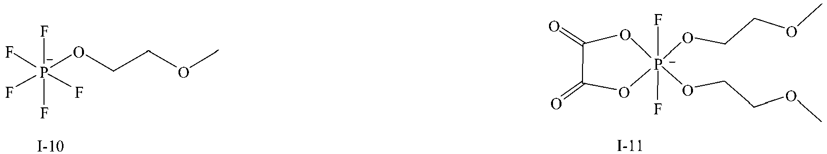 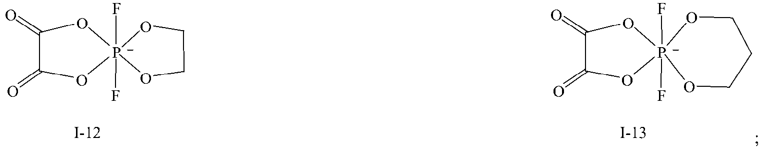 and optionally, the first anion is one or more selected from the group consisting of I-3, I-4, I-8, and I-9.

10. The electrolyte solution according to any one of claims 1 to 9, wherein a molar concentration of the first anion in the electrolyte solution ranges from 0.5 mol/L to 4 mol/L, optionally, ranges from 1 mol/L to 3.5 mol/L, and further optionally, ranges from 1.5 mol/L to 3 mol/L.

11. The electrolyte solution according to any one of claims 1 to 10, wherein the electrolyte solution further comprises a second anion, and the second anion is one or more selected from the group consisting of bis(fluorosulfonyl)imide anions, bis(trifluoromethanesulfonyl)imide anions, bis(oxalato)borate anions, difluoro(oxalato)borate anions, difluorobis(oxalato)phosphate anions, tetrafluoro(oxalato)phosphate anions, difluorophosphate anions, hexafluorophosphate anions, tetrafluoroborate anions, hexafluoroarsenate anions, and trifluoromethanesulfonate anions;
optionally, the second anion is one or more selected from the group consisting of bis(fluorosulfonyl)imide anions, bis(trifluoromethanesulfonyl)imide anions, difluoro(oxalato)borate anions, and tetrafluoro(oxalato)phosphate anions; and/or
optionally, a molar concentration of the second anion in the electrolyte solution is less than or equal to 4 mol/L, optionally, is less than or equal to 2 mol/L, or further optionally, is less than or equal to 1 mol/L.

12. The electrolyte solution according to any one of claims 1 to 11, wherein the electrolyte solution is a first cation, and the first cation is one or more selected from the group consisting of alkali metal ions, alkaline earth metal ions, zinc ions, and aluminum ions, optionally, is one or more selected from the group consisting of lithium ions, sodium ions, potassium ions, and magnesium ions, and further optionally, is lithium ions.

13. The electrolyte solution according to any one of claims 1 to 12, wherein the electrolyte solution comprises a solvent, the solvent comprises a first solvent, and the first solvent is one or more selected from the group consisting of ester and halogenated ester solvents, sulfone solvents, nitrile solvents, ether solvents, and ionic liquids;
optionally, the first solvent is one or more selected from the group consisting of dimethyl carbonate, diethyl carbonate, ethyl methyl carbonate, ethylene carbonate, propylene carbonate, fluoroethylene carbonate, difluoroethylene carbonate, methyl trifluoroethyl carbonate, ethyl trifluoroethyl carbonate, bis(2,2,2-trifluoroethyl) carbonate, methyl formate, ethyl formate, propyl formate, methyl acetate, ethyl acetate, propyl acetate, methyl propionate, ethyl propionate, propyl propionate, methyl 2,2,2-trifluoroacetate, ethyl 2,2,2-trifluoroacetate, dimethyl ether, diethyl ether, dipropyl ether, dibutyl ether, methyl ethyl ether, methyl propyl ether, methyl butyl ether, ethyl propyl ether, ethyl butyl ether, propyl butyl ether, dimethoxymethane, diethoxymethane, dipropoxymethane, 1,2-dimethoxyethane, dimethoxypropane, 1,2-diethoxyethane, ethylene glycol methyl ethyl ether, diethylene glycol dimethyl ether, triethylene glycol dimethyl ether, tetraethylene glycol dimethyl ether, tetrahydrofuran, 1,3-dioxolane, tetrahydropyran, 1,3-dioxane, 1,4-dioxane, dimethyl sulfone, dimethyl sulfoxide, sulfolane, ethyl methyl sulfone, tetramethylene sulfoxide, ethyl methyl sulfoxide, diethyl sulfone, diethyl sulfoxide, methyl phenyl sulfone, methyl phenyl sulfoxide, ethyl phenyl sulfone, ethyl phenyl sulfoxide, vinyl phenyl sulfone, vinyl phenyl sulfoxide, acetonitrile, propionitrile, butyronitrile, succinonitrile, and 2-butenenitrile; and
further optionally, the first solvent is one or more selected from the group consisting of dimethoxymethane, diethoxymethane, dipropoxymethane, 1,2-dimethoxyethane, dimethoxypropane, 1,2-diethoxyethane, ethylene glycol methyl ethyl ether, diethylene glycol dimethyl ether, triethylene glycol dimethyl ether, and tetraethylene glycol dimethyl ether.

14. The electrolyte solution according to claim 13, wherein the solvent further comprises a second solvent, and the second solvent is one or more selected from the group consisting of hydrocarbon and halogenated hydrocarbon solvents and fluoroether solvents;
optionally, the second solvent is one or more selected from the group consisting of cyclohexane, benzene, toluene, p-xylene, m-xylene, o-xylene, fluorobenzene, 1,4-difluorobenzene, 1,3-difluorobenzene, 1,2-difluorobenzene, trifluoromethylbenzene, trifluoromethoxybenzene, decafluoropentane, perfluoropentanone, 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether; and
further optionally, the second solvent is one or more selected from the group consisting of trifluoromethoxybenzene, 1,1,2,2-tetrafluoroethyl-2,2,3,3-tetrafluoropropyl ether, and 1,2-bis(1,1,2,2-tetrafluoroethoxy)ethane.

15. The electrolyte solution according to claim 14, wherein a weight ratio of the first solvent to the second solvent ranges from (0.1 to 10):1, optionally, ranges from (0.3 to 3):1, and further optionally, ranges from (0.5 to 1.5):1.

16. The electrolyte solution according to any one of claims 1 to 15, wherein the electrolyte solution further comprises an additive, and the additive is one or more selected from the group consisting of propane sultone, ethylene sulfate, ethylene sulfite, tris(trimethylsilyl) phosphate, tris(trimethylsilyl) phosphite, tris(trifluoroethyl) phosphate, tris(trifluoroethyl) phosphite, tris(trimethylsilyl) borate, dimethyl maleic anhydride, and 1,4-butylene diisocyanate; and
optionally, a weight proportion of the additive in the electrolyte solution is less than or equal to 5 wt%, optionally, is less than or equal to 3 wt%, or further optionally, is less than or equal to 1 wt%.

17. A battery cell, comprising the electrolyte solution according to any one of claims 1 to 16.

18. The battery cell according to claim 17, wherein the battery cell comprises metal battery cells, metal-air battery cells, metal-sulfur battery cells, and anode-free metal battery cells, and optionally, lithium metal battery cells, anode-free lithium metal battery cells, lithium-air battery cells, and lithium-sulfur battery cells.

19. A battery, comprising the battery cell according to claim 17 or 18.

20. A power consuming apparatus, comprising the battery according to claim 19.
